# EUROPÄISCHE PATENTSCHRIFT

(11) **EP 2 943 090 B1**
(45) Veröffentlichungstag und Bekanntmachung des Hinweises auf die Patenterteilung: **16.06.2021**
(21) Anmeldenummer: 13834383.5
(22) Anmeldetag: 18.12.2013
(51) Int. Cl.: A47B 47/04, F16B 5/07

(54) **LEIMLOSER PLATTENVERBUND SOWIE VERFAHREN ZUM LEIMLOSEN VERBINDEN ZWEIER PLATTENELEMENTE**
GLUELESS COMPOSITE PANEL AND METHOD FOR THE GLUELESS CONNECTION OF TWO PANEL ELEMENTS
PANNEAU COMPOSITE SANS COLLE AINSI QUE PROCÉDÉ D'ASSEMBLAGE SANS COLLE DE DEUX PANNEAUX ÉLÉMENTAIRES

(30) Priorität: 14.01.2013 DE 102013100352
(43) Veröffentlichungstag der Anmeldung: 18.11.2015
(73) Patentinhaber: Schulte, Guido, 59602 Rüthen-Meiste (DE)
(72) Erfinder: Schulte, Guido, 59602 Rüthen-Meiste (DE)
(74) Vertreter: Osterhoff, Utz
(86) Internationale Anmeldenummer: PCT/DE2013/100431
(87) Internationale Veröffentlichungsnummer: WO 2014/108114

(56) Entgegenhaltungen:
- WO-A1-2011/160173
- WO-A2-2013/093636
- US-A1- 2008 302 279

## Beschreibung

Die Erfindung betrifft einen leimlosen Plattenverbund gemäß den Merkmalen im Oberbegriff von Patentanspruch 1 sowie ein Verfahren zum leimlosen Verbinden wenigstens zweier Plattenelemente eines Plattenverbundes gemäß den Merkmalen von Patentanspruch 14.

Eine Vielzahl von Einrichtungsgegenständen beinhaltet Plattenelemente oder wird durch diese gebildet. Neben rein dekorativen Anordnungen bilden sie insbesondere in Form von Möbeln den vorwiegenden Teil der Gestaltung von zumeist geschlossenen Räumen. Je nach Funktionalität als Sitzmöbel, Tisch oder Behältnismöbel finden diese auch im Außenbereich ihren Einsatz.

Um eine Sitz-, Lagerungs- oder Abstellfläche zu schaffen, weisen diese ein zumeist horizontal ausgerichtetes Plattenelement auf, welches entweder direkt an einem Wandbereich oder über eine zusätzliche Anordnung an einem Wand- oder auf einem Bodenbereich gelagert oder aufgestellt ist. Deren Ausgestaltung sieht zumeist wenigstens zwei Plattenelemente vor, welche in zueinander abgewinkelter Ausrichtung miteinander verbunden sind. Insbesondere Lagerungs- oder Behältnismöbel weisen hierbei einen offenen Korpus aus drei und mehr Plattenelementen auf, welcher bei Bedarf beispielsweise über eine Tür geschlossen werden kann.

Das zumeist selbsttragende Basiselement eines solchen Einrichtungsgegenstandes weist eine Grundkonstruktion auf, welche sich in den meisten Fällen aus wenigstens zwei Plattenelementen zusammensetzt. Dabei können die einzelnen Plattenelemente beispielsweise die Funktion eines Seitenteils, eines Bodens oder eines Deckels übernehmen. Insbesondere bei so geschaffenen Korpussen werden deren zu einem Rahmen zusammengesetzten Plattenelemente über eine Rückwand miteinander verbunden, welche in Form einer Scheibe die Lage der einzelnen Plattenelemente zueinander stabilisiert und fixiert.

Im Stand der Technik ist es bekannt, die einzelnen Plattenelemente beispielsweise verleimt oder zerlegbar zusammenzufügen. Dabei werden die miteinander in Kontakt tretenden Bereiche der Plattenelemente über eine geeignete Klebeverbindung miteinander verbunden. Derartige Klebeverbindungen erfolgen zumeist unter Verwendung zusätzlicher Holzdübel. Neben dem stumpfen Stoßen der Plattenelemente können diese stirnseitig auch eine Gehrung aufweisen, worüber die Ausrichtung der miteinander verbundenen Plattenelemente zueinander bestimmt wird.

Demgegenüber werden zerlegbare Konstruktionen derart realisiert, dass die einzelnen Plattenelemente beispielsweise über lösbare Möbelverbinder miteinander gekoppelt sind. Neben den beispielsweise bei einem Korpus im Innenbereich zu verwendenden Verbindungsbeschlägen haben sich zudem unsichtbare Korpusverbinder etabliert. Diese weisen einen Schraubbolzen auf, welcher über sein Gewinde in eine Stirnseite oder Seitenfläche des jeweiligen Wandelements eingeschraubt wird. Ein gewindeloser Abschnitt des Schraubbolzens weist dabei einen Bolzenkopf auf, welcher mit einem flachzylindrischen Exzenterverbinder korrespondiert.

Geleimte Verbindungen bieten eine überaus haltbare Möglichkeit, einzelne Plattenelemente untereinander zu verbinden. Die jeweils erforderliche Klebeverbindung hängt von der zu erwartenden Belastung und insbesondere von den verwendeten Materialien für die Plattenelemente ab. In üblicher Weise werden solche Plattenelemente beispielsweise aus Holz oder Holzwerkstoffen bereitgestellt.

Darüber hinaus können diese aber auch beispielsweise aus Kunststoff oder Glas sowie mineralischen Bestandteilen gebildet sein.

Aufgrund der zumeist erforderlichen Anordnung von Holzdübeln zur Lagefixierung und Übertragung von Schubkräften sowie der unerlässlichen Trockenzeit benötigen derartige Verbindungen eine entsprechend lange Herstellungszeit. Weiterhin ist eine überaus sorgfältige Arbeitsweise notwendig, um neben einer haltbaren Verbindung nicht ungewollte Verunreinigungen der Sichtflächen mit Kleber, beispielsweise mit Leim, zu erhalten. Ferner muss ein miteinander verklebter Plattenverbund bei Bedarf zerstört werden, um diesen zu zerlegen.

Demgegenüber bietet die Verwendung von Möbelverbindern eine einfache Möglichkeit für die leimlose Herstellung eines solchen Plattenverbundes. Bei Bedarf kann dieser dann einfach über die lösbaren Verbindungsmittel zerlegt und beispielsweise an anderer Stelle wieder zusammengebaut werden. Gleichwohl stellen derartige Möbelverbinder entsprechende Anforderungen an die Konfektionierung der Wandelemente, was durch zusätzlichen Aufwand beim Montieren eines solchen Plattenverbundes ergänzt wird. Insbesondere die für den Zusammenbau notwendige Zeit treibt die zur Herstellung entstehenden Kosten in die Höhe. Insofern ist eine wirtschaftliche Herstellung eines derartigen Plattenverbundes nur schwer möglich. Hinzu kommt die Gefahr etwaiger überdrehter Verbindungsmittel, welche beispielsweise zu einem Ausbruch des Innengewindes innerhalb eines solchen Plattenelements führt.

Die DE 20 2009 008 825 U1 offenbart eine weitere Möglichkeit zur Zusammensetzung zweier Plattenelemente, welche über an diesen angeordnete Kopplungsmittel leimlos miteinander verbindbar sind. Als leimloser Plattenverbund weist dieser wenigstens ein erstes Plattenelement und ein zweites Plattenelement auf, welche im miteinander verbundenen Zustand einen Winkel ungleich 180 Grad zwischen sich einschließen. Die Kopplungsmittel erstrecken sich jeweils parallel zu einer Längsrichtung der Stirnseiten der Plattenelemente.

Die Kopplungsmittel werden dadurch gebildet, dass das erste Plattenelement eine erste Nut besitzt, welche an seiner Stirnseite angeordnet ist. Demgegenüber weist das zweite Plattenelement eine Nut auf, welche an einem an seine Stirnseite seitlich anschließenden inneren Randbereich angeordnet ist und seitlich durch eine in die Stirnseite übergehende Randleiste begrenzt ist. Die in der Stirnseite des ersten Plattenelements angeordnete Nut ist durch eine Zunge und eine gegenüber der Zunge zurückspringende erste Randleiste begrenzt.

Die erste Randleiste ist dabei insofern elastisch ausgestaltet, als dass sie über einen in der Seitenfläche des ersten Plattenelements angeordneten Schlitz freigestellt ist und während des Koppelvorgangs federnd in diesen verdrängbar ist.

Hierdurch wird ein leimloser Plattenverbund geschaffen, welcher eine schnelle Montage der miteinander zu verbindenden Plattenelemente ermöglicht. Ein etwaiges Lösen der Verbindung ist allerdings nur mit entsprechendem Aufwand möglich, wobei die Gefahr einer Zerstörung, insbesondere des federelastischen Teils der ersten Randleiste, nicht grundsätzlich zu verhindern ist. Weiterhin müssen die miteinander zu verbindenden Plattenelemente in Bezug auf ihre Kopplungsmittel mit entsprechendem Aufwand sowie Präzision gestaltet sein, um die notwendige Spannung zwischen den zu verbindenden Plattenelementen herzustellen. Nur so lässt sich eine möglichst spaltfreie Verbindung zwischen den Plattenelementen realisieren.

Aus der vorangemeldeten und nachveröffentlichten WO 2013/093636 A2 ist ein leimloser Korpus sowie ein Verfahren zum leimlosen Verbinden von Wandelementen eines Korpus bekannt. Jede Stirnseite eines Wandelementes weist eine Nut und eine Feder auf, so dass im verbundenen Zustand der Wandelemente die jeweilige Nut und Feder eines der Wandelemente mit der jeweils anderen Nut und Feder des benachbarten Wandelementes miteinander in Eingriff stehen.

Ein weiterer leimloser Plattenverbund ist bspw. aus der WO 2011/160173 A1 bekannt.

Vor diesem Hintergrund bietet der leimlose Plattenverbund aus einzelnen Plattenelementen noch Raum für Verbesserungen.

Der vorliegenden Erfindung liegt dabei die Aufgabe zugrunde, einen leimlosen Plattenverbund sowie ein Verfahren zum leimlosen Verbinden wenigstens zweier Plattenelemente zu einem Plattenverbund aufzuzeigen, wobei die Plattenelemente eine einfache Herstellung ihrer robust ausgeführten Kopplungsmittel ermöglichen sollen, über welche die Plattenelemente innerhalb kürzester Zeit zu einem haltbaren Plattenverbund zusammengesetzt werden können, der bei Bedarf ohne Ermüdung oder gar Zerstörung der Kopplungselemente problemlos zerlegbar ist.

Die Lösung des gegenständlichen Teils der Aufgabe besteht nach der Erfindung in einem leimlosen Plattenverbund mit den Merkmalen von Patentanspruch 1. Der verfahrensmäßige Teil dieser Aufgabe wird durch ein Verfahren zum leimlosen Verbinden wenigstens zweier Plattenelemente zu einem Plattenverbund mit den Merkmalen von Patentanspruch 14 gelöst.

Hiernach umfasst der leimlose Plattenverbund wenigstens ein erstes Plattenelement und ein zweites Plattenelement, wobei die beiden Plattenelement über an diesen angeordnete und sich jeweils parallel zu einer Längsrichtung deren jeweiligen Stirnseiten erstreckende Kopplungsmittel miteinander verbindbar sind. Im miteinander verbundenen Zustand der Plattenelemente schließen diese einen Winkel ungleich 180 Grad zwischen sich ein. Die einzelnen Kopplungsmittel werden insofern gebildet, als dass das erste Plattenelement eine erste Nut an seiner ersten Stirnseite besitzt, während das zweite Plattenelement eine zweite Nut umfasst, welche allerdings nicht an seiner zweiten Stirnseite, sondern an einem an seine zweite Stirnseite seitlich anschließenden inneren Randbereich angeordnet ist. Die im inneren Randbereich des zweiten Plattenelements angeordnete Nut ist seitlich durch eine in die zweite Stirnseite des zweiten Plattenelements übergehende zweite Randleiste begrenzt. Die stirnseitig des ersten Plattenelements eingebrachte erste Nut ist durch eine Zunge und eine gegenüber der Zunge zurückspringende erste Randleiste begrenzt.

Erfindungsgemäß sind sowohl die erste Randleiste als auch die zweite Randleiste der jeweiligen Plattenelemente in ihrer Erstreckung parallel zur Längsrichtung der jeweiligen Stirnseiten mehrfach unterbrochen. Hierdurch sind sowohl die erste Randleiste in einzelne erste Leistenabschnitte als auch die zweite Randleiste in einzelne zweite Leistenabschnitte unterteilt. Die jeweiligen Leistenabschnitte sind dabei so an den zu verbindenden Plattenelementen angeordnet, dass in deren gekoppelten Zustand die ersten Leistenabschnitte und die zweiten Leistenabschnitte sich zumindest bereichsweise hinterschneiden. In dieser Lage hintergreifen sich die ersten Leistenabschnitte und die zweiten Leistenabschnitte gegenseitig. Dabei sind die ersten Leistenabschnitte des ersten Plattenelements in der zweiten Nut des zweiten Plattenelements angeordnet, während die zweiten Leistenabschnitte des zweiten Plattenelements in der ersten Nut des ersten Plattenelements angeordnet sind.

Der besondere Vorteil besteht hierbei in dem Verzicht auf etwaige gezielt nachgiebig ausgebildete Teile der Kopplungsmittel. Hierdurch muss keinerlei Widerstand beim Koppeln der einzelnen Plattenelemente überwunden werden, welcher ansonsten nur durch seitliches Verdrängen eines Teils der Kopplungsmittel überwindbar ist. Durch den Verzicht auf federnde Teile der Kopplungsmittel wird eine mögliche Materialschwächung bereits während des Fügens der Plattenelemente wirksam verhindert. Darüber hinaus gestatten die so ausgestalteten Kopplungsmittel deren robuste, unnachgiebige Ausführung, welche auch über lange Zeit hinweg eine haltbare Verbindung zwischen den Plattenelementen bewirkt.

Um bei Bedarf eine erhöhte Spannung zwischen den sich umgreifenden Teilen der Kopplungsmittel bereit zu stellen, kann wenigstens einer der ersten Leistenabschnitte oder der zweiten Leistenabschnitte zumindest bereichsweise keilförmig ausgestaltet sein. Dabei erstreckt sich besagte Keilform parallel zur Längsrichtung der jeweiligen Stirnseite. Die Keilform bewirkt, dass der so ausgestaltete Leistenabschnitt bei einer beständigen Relativbewegung zwischen den beiden über die Kopplungsmittel miteinander in Eingriff stehenden Plattenelementen einen zunehmenden Kraftaufwand erfordert, um parallel zur Längsrichtung einer der Stirnseiten weiter in die jeweilige Nut hinein geschoben zu werden. Ursächlich hierfür ist der ansteigende Anpressdruck zwischen dem zumindest bereichsweise keilförmig ausgestalteten Leistenabschnitt und der ansonsten über ihren Verlauf hinweg gleichmäßig breiten Nut.

Demgegenüber kann wenigstens eine der jeweils im Bereich der Leistenabschnitte befindlichen Nuten einen solchen keilförmigen Verlauf aufweisen, während der mit der so ausgestalteten Nut korrespondierende Leistenabschnitt keine oder eine abweichende Keilform wenigstens eines seiner Bereiche besitzt. In jedem Fall muss die keilförmige Ausgestaltung so ausgebildet sein, dass sich beim Einschieben eines Leistenabschnitts in eine der Nuten deren Spannung im Kontaktbereich zueinander erhöht, indem der jeweilige Querschnitt des Leistenabschnitts entweder verdickt oder aber der entsprechende Querschnitt der Nut verjüngt ist.

Ein weiterer Vorteil der in einzelne Leistenabschnitte unterteilten Randleisten ist darin zu sehen, dass die miteinander zu verbindenden Plattenelemente nicht über die gesamte Länge der Randleisten hinweg ineinander geschoben werden müssen, sondern nur versetzt zueinander angenähert und über eine entgegengesetzt ausgerichtete Relativbewegung zueinander miteinander verriegelt werden. Hierbei werden die einzelnen Leistenabschnitte eines der Plattenelemente zwischen den Leistenabschnitten des jeweils anderen Plattenelements hindurch geschoben, bis deren jeweilige Lage in Ebene der entsprechenden Nut verläuft. Anschließend werden die einzelnen Leistenabschnitte in den jeweiligen Nuten verschoben, indem die beiden Plattenelemente entgegengesetzt zueinander parallel zur Längsrichtung einer der Stirnseiten verlagert werden. In dieser Position hinterschneiden sich die jeweiligen Leistenabschnitte des ersten Plattenelements und des zweiten Plattenelements zumindest bereichsweise.

Die miteinander zu verbindenden Plattenelemente weisen in der Regel dieselbe, parallel zur Längsrichtung ihrer Stirnseiten gemessene Breite auf. Bevorzugt sind die einzelnen Leistenabschnitte so an den jeweiligen Plattenelementen angeordnet, dass diese im miteinander verbundenen Zustand der Plattenelemente miteinander fluchten. Hierdurch ist sichergestellt, dass die zwischen den Stirnseiten des jeweiligen Plattenelements randseitig verlaufenden Kanten im gekoppelten Zustand der beiden Plattenelemente in derselben Ebene verlaufen.

Sofern die miteinander zu verbindenden Plattenelemente eine voneinander unterschiedliche Breite besitzen, sind die jeweiligen Leistenabschnitte bevorzugt so angeordnet, dass diese miteinander fluchten, wenn die jeweils zu einer Schmalseite des Plattenverbunds weisenden Kanten nach der Relativbewegung der beiden Plattenelemente zueinander in derselben Ebene verlaufen.

Weiterhin ist vorgesehen, dass die zweite Stirnseite des zweiten Plattenelements eine sich parallel zu deren Längsrichtung erstreckende Kopfleiste besitzt.

Demgegenüber weist die Zunge des ersten Plattenelements einen mit der Kopfleiste korrespondierenden Kuppelkanal auf. Hierbei ist die Kopfleiste des einen Plattenelements in gekoppelten Zustand der beiden Plattenelemente in dem Rastkanal des anderen Plattenelements angeordnet.

Der Vorteil ist darin zu sehen, dass die beiden miteinander verbundenen Plattenelemente durch die in dem Kuppelkanal angeordnete Kopfleiste eine Führung besitzen, innerhalb derer die beiden Plattenelemente während der Relativbewegung zueinander gehalten sind. Darüber hinaus werden durch den Kuppelkanal und die darin angeordnete Kopfleiste zusätzliche Berührungsflächen geschaffen, welche aufgrund ihres Abstands zu einem möglichen Drehpunkt zwischen den miteinander gekoppelten Plattenelementen stehen und die jeweils erforderliche Biegesteifigkeit des so geschaffenen Plattenverbundes erhöhen.

In diesem Zusammenhang kann die Kopfleiste an den Querschnitt des Kuppelkanals formangepasst sein. Auf diese Weise wird ein möglichst strammer Sitz zwischen der Kopfleiste und dem Kuppelkanal erzeugt, welcher eine stramme und somit bewegungsarme Verbindung zwischen den beiden Plattenelementen ermöglicht. Vorteilhafte Weiterbildungen des gegenständlichen Erfindungsgedankens sind Gegenstand der abhängigen Patentansprüche 2 bis 13.

So können sowohl die ersten Leistenabschnitte in einem Abstand als auch die zweiten Leistenabschnitte in einem Abstand voneinander angeordnet sein. Besonders bevorzugt ist der jeweilige Abstand zwischen den ersten Leistenabschnitten oder den zweiten Leistenabschnitten konstant. Je nach Ausführung kann der jeweilige Abstand zwischen den ersten Leistenabschnitten oder den zweiten Leistenabschnitten auch unterschiedlich sein. Unterschiedlich meint, dass beispielsweise zwei unmittelbar benachbarte Leistenabschnitte eines Plattenelements einen Abstand voneinander besitzen, welcher sich von dem Abstand dieser Leistenabschnitte zu einem jeweils benachbarten Leistenabschnitt unterscheidet.

Bei unterschiedlichen Abständen zwischen den einzelnen Leistenabschnitten sind diese bevorzugt so ausgeführt, dass diese sich wiederholen. Mit anderen Worten können zwei Leistenabschnitte einen großen Abstand zwischen sich ausweisen, während sie zum jeweils benachbarten Leistenabschnitt einen nur kleinen Abstand besitzen. Die in Längsrichtung darauf folgenden Leistenabschnitte nehmen demgegenüber wiederum einen großen Abstand ein und so weiter.

Durch die Anordnung der einzelnen Abstände der Leistenabschnitte kann die jeweilige Anzahl der Leistenabschnitte an dem jeweiligen Plattenelement eingestellt sein. Eine große Anzahl von Leistenabschnitten bewirkt, dass die miteinander verbundenen Plattenelemente eine Vielzahl von Hinterschneidungen aufweisen. Mit einem großen Abstand zueinander angeordnete Leistenabschnitte reduzieren demgegenüber deren Anzahl, so dass auch die Menge möglicher Hinterschneidungen innerhalb des Plattenverbunds reduziert ist. Auf diese Weise können Bereiche, welche in Bezug auf die Kopplung der beiden Plattenelemente höheren Belastungen unterliegen, eine Vielzahl an Leistenabschnitten besitzen. Demgegenüber können weniger belastete Bereiche so ausgeführt sein, dass die dort angeordneten Leistenabschnitte aufgrund ihrer großen Abstände zueinander auf ein Minimum reduziert sind.

Die einzelnen Leistenabschnitte weisen eine Länge auf, welche insbesondere durch den jeweiligen Abstand der einzelnen Leistenabschnitte zueinander bestimmt ist. So wird in Bezug auf die Fertigung zunächst eine Randleiste an einem der Plattenelemente geschaffen, welche anschließend durch entsprechenden Materialabtrag in einzelne Leistenabschnitte unterbrochen wird. Sofern die einzelnen Unterbrechungen in Bezug auf die jeweilige Längsrichtung der Randleisten klein ausfallen, während die Abstände der einzelnen Unterbrechungen zueinander groß sind, wird eine entsprechende Länge der einzelnen Leistenabschnitte erreicht. Demgegenüber können die Unterbrechungen auch größere Bereiche einnehmen, so dass bei enger Anordnung der einzelnen Unterbrechungen die Länge der jeweiligen Leistenabschnitte deutlich reduziert ist.

Bevorzugt entspricht der Abstand der ersten Leistenabschnitte untereinander mindestens einer parallel zur Längsrichtung der zweiten Stirnseite gemessenen Länge der zweiten Leistenabschnitte. Demgegenüber kann der Abstand der zweiten Leistenabschnitte untereinander mindestens eine parallel zur Längsrichtung der ersten Stirnseite gemessenen Länge der ersten Leistenabschnitte entsprechen.

Auf diese Weise sind die jeweiligen Längen der Leistenabschnitte eines Plattenelements an die Abstände zwischen den einzelnen Leistenabschnitten des anderen Plattenelements angepasst. Durch dieses Verhältnis wird die größtmögliche Fläche für die notwendigen Hinterschneidungen erzeugt.

Weiterhin ist vorgesehen, dass auch die ersten Leistenabschnitte an die zweite Nut und die zweiten Leistenabschnitte entsprechend an die erste Nut jeweils formangepasst sind. Selbstverständlich kann sich die jeweils formangepasste Querschnittsform der Leistenabschnitte und Nuten auch nur auf einige Abschnitte oder Bereiche derselben beziehen.

In vorteilhafter Weise kann die Zunge des ersten Plattenelements in eine der inneren Seitenfläche des ersten Plattenelements gegenüberliegende äußere Seitenfläche übergehen. Hierdurch geht die Zunge nahtlos aus der äußeren Seitenfläche des ersten Plattenelements hervor oder in diese über, ohne den optischen Gesamteindruck der äußeren Seitenfläche durch eine etwaige Unterbrechung oder gar einen Querschnittssprung zu beeinträchtigen. Darüber hinaus wird hierdurch eine möglichst schlanke Verbindung der beiden Plattenelemente geschaffen, deren jeweilige Kopplungsmittel so angeordnet sind, dass diese im verbundenen Zustand der beiden Plattenelemente sich gegenseitig abdecken und somit optisch nicht wahrnehmbar sind.

Mit anderen Worten handelt es sich vorliegend um innenliegende Kopplungsmittel. Grundsätzlich können die einzelnen Kopplungsmittel beispielsweise über eine Klebeverbindung oder anderweitige Verbindungsmittel an dem jeweiligen Plattenelement festgelegt sein.

Besonders bevorzugt sind die jeweiligen Kopplungsmittel materialeinheitlich einstückiger Bestandteil des jeweiligen Plattenelements. Hierbei sind die Kopplungsmittel aus den jeweiligen Plattenelementen heraus geformt. Sofern die Plattenelemente beispielsweise aus einem Holzwerkstoff bestehen, können die Kopplungsmittel bereits während der Herstellung des jeweiligen Plattenelements an diesem angeformt sein. Demgegenüber können die Kopplungsmittel auch durch einen entsprechenden Materialabtrag aus dem Material des jeweiligen Plattenelements heraus geformt sein.

Besonders bevorzugt kann die Zunge des ersten Plattenelements so ausgestaltet sein, dass sie im gekoppelten Zustand der Plattenelemente die zweite Stirnseite des zweiten Plattenelements vollständig verdeckt. Auf diese Weise wird eine mögliche optische Beeinträchtigung des Plattenverbunds im Bereich der Kopplungsmittel weitestgehend reduziert, da sich die optisch wahrnehmbare Trennung des Plattenverbunds in die einzelnen Plattenelemente lediglich auf eine Unterbrechung zwischen der Zunge des ersten Plattenelements und der zweiten Stirnseite des zweiten Plattenelements reduziert. Besagte Unterbrechung ist dabei im verbundenen Zustand der beiden Plattenelemente nur an einer Seitenfläche des Plattenverbundes in Bezug auf das zweite Plattenelement wahrnehmbar.

In vorteilhafter Weise sind die einzelnen Kopplungsmittel steif ausgebildet. Hierdurch führt ein in der Praxis beim Koppeln der einzelnen Plattenelemente nicht auszuschließender Anprall zu keiner die Kopplung mindernde Beschädigung der Kopplungsmittel. Darüber hinaus sind so keine bewusst elastisch ausgebildeten Bereiche der Kopplungsmittel vorgesehen, welche insbesondere bei einer Dauerbelastung oder gar Überbeanspruchung während der Nutzung oder bereits während des Verbindungsvorgangs Schaden nehmen können. Insbesondere beim Zusammenbau mit derart elastischen Kopplungsmittel ausgestatteter Plattenelemente ist eine mögliche bereichsweise Überdehnung nicht auszuschließen, in deren Folge eine plastische Verformung oder gar eine Beschädigung des elastisch ausgebildeten Teils der Kopplungsmittel erfolgt, durch welche die eigentliche Koppelwirkung innerhalb des Plattenverbundes deutlich reduziert ist.

Grundsätzlich kann ein der äußeren Seitenfläche des ersten Plattenelements gegenüberliegender und an die erste Stirnseite angrenzender erster Teilbereich der Zunge so ausgebildet sein, dass dieser einen parallelen Verlauf zu der äußeren Seitenfläche aufweist. Hierdurch besitzt die Zunge eine gleich bleibende Dicke in Bezug auf ihre Erstreckung senkrecht zu der ersten Randleiste.

Demgegenüber kann die Zunge auch so ausgebildet sein, dass zumindest ein erster Teilbereich der Zunge und eine äußere Seitenfläche des ersten Plattenelements einen ersten Winkel kleiner 90 Grad zwischen sich einschließen. Auf diese Weise ist zumindest ein erster Teilbereich der Zunge gegenüber der äußeren Seitenfläche des ersten Plattenelements geneigt. In diesem Zusammenhang kann das zweite Plattenelement so ausgebildet sein, dass wenigstens ein zweiter Teilbereich seiner zweiten Stirnseite und ein dem inneren Randbereich gegenüberliegender äußerer Randbereich einen zweiten Winkel zwischen sich einschließen, welcher ebenfalls kleiner 90 Grad ist. Somit ist auch ein zweiter Teilbereich der zweiten Stirnseite gegenüber dem äußeren Randbereich des zweiten Plattenelements geneigt.

Auf diese Weise kann entweder der erste Teilbereich des ersten Plattenelements oder aber der zweite Teilbereich des zweiten Plattenelements geneigt ausgeführt sein. Selbstverständlich können auch sowohl der erste Teilbereich als auch der zweite Teilbereich der beiden Plattenelemente auf diese Weise geneigt ausgestaltet sein.

Der besondere Vorteil ist darin zu sehen, dass die einzelnen Teilbereiche der jeweiligen Stirnseiten der beiden Plattenelemente an die jeweilige Kopplungssituation angepasst sind. Die Kopplungssituation meint die jeweilige Lage der beiden Plattenelemente zueinander in Bezug auf deren zwischen ihnen eingeschlossenen Winkel. Durch die Neigung wenigstens eines der Teilbereiche wird die jeweilige Kontaktfläche zwischen den Plattenelementen vergrößert, wodurch bei gleicher Belastung etwaige Spannungen zwischen den Plattenelementen reduziert sind. Des weiteren können die optischen Eigenschaften des Plattenverbundes dahingehend eingestellt sein, dass insbesondere durch die Neigung des ersten Teilbereichs der Zunge eine Verschiebung der optisch wahrnehmbaren Verbindungsebene zwischen den Plattenelementen möglichst nahe an die äußere Seitenfläche des ersten Plattenelements verschiebbar ist.

In vorteilhafter Weise sind die jeweiligen Teilbereiche in Bezug auf ihre Neigung so aufeinander abgestimmt, dass diese bei vorgesehener Winkelstellung der beiden miteinander verbundenen Plattenelemente flächig aufeinander liegen. Hierdurch kann die gesamte Fläche der Teilbereiche genutzt werden, um die auftretenden Spannungen zwischen diesen zu übertragen.

In einer vorteilhaften Weiterbildung kann die im verbundenen Zustand der Plattenelemente zwischen dem ersten Teilbereich und dem zweiten Teilbereich verlaufende Verbindungsebene derart verlaufen, dass diese eine im Schnittpunkt der jeweiligen Verlängerungen des äußeren Randbereichs des zweiten Plattenelements und der äußeren Seitenfläche des ersten Plattenelements gelegene äußere Ecke schneidet. Auf diese Weise verläuft besagte Verbindungsebene durch die äußere Ecke des aus den Plattenelementen gebildeten Plattenverbundes.

In vorteilhafter Weise kann die ansonsten auf einer der äußeren Seitenflächen der miteinander verbundenen Plattenelemente optisch wahrnehmbare Verbindungsebene in dem äußeren Eckbereich des Plattenverbundes verschoben sein. Hierdurch ergibt sich die typische Optik zweiter auf Gehrung geschnittener und miteinander verbundener Plattenelemente.

Neben der Verbindung von zwei Plattenelementen können diese selbstverständlich entweder nur an einer ihrer Stirnseiten oder an mehreren ihrer Stirnseiten ausgebildete Kopplungsmittel in der zuvor aufgezeigten Form beinhalten. So sieht die Erfindung vor, dass der erfindungsgemäße Plattenverbund wenigstens drei solcher Plattenelemente umfassen kann, wobei die jeweiligen Plattenelemente im miteinander gekoppelten Zustand einen leimlosen Korpus beispielsweise für ein Möbel in Form eines in sich geschlossenen Rahmens bilden. Auf diese Weise können auch vier und mehr solcher Plattenelemente zu einem offenen oder in sich geschlossenen Rahmen zusammengesetzt sein.

Bevorzugt können die Plattenelemente eine jeweils innerhalb des zusammengesetzten Rahmens verlaufende Nut aufweisen. Innerhalb dieser umlaufenden Nut ist eine Rückwand anordenbar. Dabei orientiert sich die Breite der Nut in vorteilhafter Weise an der jeweiligen Dicke der Rückwand, um diese möglichst spielfrei aufzunehmen. Die Nut kann sich dabei bis in die Eckbereiche des in sich geschlossenen Rahmens hinein erstrecken, so dass eine umlaufende Nut innerhalb des Rahmens ausgebildet ist. Hierbei ist es notwendig, die Rückwand noch vor dem Schließen des Rahmens in die vorhandenen Nuten der einzelnen Plattenelemente einzuschieben, bevor dieser beispielsweise durch einen Deckel geschlossen wird. Dies vor dem Hintergrund, da ein nachträgliches Einschieben der Rückwand in diese Nut sonst nicht möglich ist.

Selbstverständlich können die jeweiligen Nuten auf den inneren Seitenflächen des Rahmens, näherhin der Plattenelemente, von den jeweiligen inneren Eckbereichen des in sich geschlossenen Rahmens zumindest bereichsweise beabstandet sein. Hierbei weist die zu verwendende Rückwand zumindest einen zurückspringenden und somit nicht vollends ausgebildeten Eckbereich auf, dessen Größe sich an der zwischen den Nuten und dem Eckbereich verbleibenden Teil der Plattenelemente orientiert. Durch diese Ausgestaltung ist es möglich, eine entsprechende Öffnung in einem inneren Eckbereich innerhalb der Rückwand zu belassen, in dessen Bereich keine optisch störende Nut innerhalb der Plattenelemente angeordnet ist.

Grundsätzlich kann die Rückwand so ausgestaltet sein, dass deren Abmessungen sich an den inneren Abmessungen des geschlossenen Rahmens zuzüglich mindestens eines Teils der jeweiligen Tiefe der in wenigstens eines der Plattenelemente eingebrachten Nut orientiert. Hierdurch wird die Rückwand nach dem Schließen des Rahmens nahezu spielfrei in Bezug auf eine Bewegung der Rückwand innerhalb deren Ebene geführt.

Alternativ hierzu kann die Rückwand im eingebauten Zustand zu wenigstens einem Plattenelement, näherhin dessen inneren Seitenfläche, beabstandet sein. In diesem Fall ist zumindest ein Keilelement vorgesehen, welches dann zwischen dieser inneren Seitenfläche des Plattenelements und der Rückwand anordenbar ist. Das Keilelement überbrückt den zwischen der Rückwand und der inneren Seitenfläche eines Plattenelements entstehenden Spalt, wobei es die ansonsten innerhalb der verbleibenden Nuten bewegliche Rückwand in ihrer Lage positioniert. Mit anderen Worten wird die ansonsten innerhalb der Nut bewegliche Rückwand durch das Keilelement in ihrer Lage fixiert und dabei gegenüber der einen inneren Seitenfläche des Plattenelements beabstandet.

Durch das wenigstens eine Keilelement kann eine entsprechende Spannung zwischen der Rückwand und wenigstens zwei sich gegenüberliegenden Plattenelementen aufgebaut werden, welche sich in die einzelnen inneren Eckbereiche und somit auf die Kopplungsmittel der miteinander verbundenen Plattenelemente überträgt.

Grundsätzlich kann wenigstens eines der Plattenelemente im Bereich der für die Rückwand vorgesehenen Nut kürzer ausgestaltet sein. Hierbei springt eine Stirnseite dieses Plattenelements hinter die Ebene der Nut benachbarter Plattenelemente zurück. Der Vorteil besteht darin, dass die Rückwand auch noch dann in ihre vorgesehene Lage innerhalb des geschlossenen Rahmens eingebracht werden kann, obwohl dieser bereits zu einem in sich geschlossenen Rahmen komplettiert ist. Der dabei zurückspringende Teil des einen Plattenelements gibt dabei die in den restlichen Plattenelementen angebrachten Nuten zu einem Rand hin frei, in welche die Rückwand nachträglich von einer Seite eingeschoben werden kann.

In Kombination mit dem erfindungsgemäßen Keilelement kann diese dann in ihrer vorgesehenen Lage innerhalb des Rahmens fixiert werden.

Beim Einsatz eines solchen Keilelements wird es als besonders vorteilhaft angesehen, wenn dieses eine Rastnase aufweist. Die Rastnase ist dafür vorgesehen, dass Keilelement in seiner vorgesehenen Lage vor unbeabsichtigtem Herausfallen oder Herausziehen zu sichern. Dabei greift die Rastnase im angeordneten Zustand des Keilelements hinter die Rückwand, während es zwischen einer inneren Seitenfläche eines der Plattenelemente und der Rückwand angeordnet ist. Selbstverständlich kann die Rastnase auch hinter einem Bereich eines Plattenelements, beispielsweise in eine Ausnehmung, hineingreifen, um in seiner Lage fixiert zu sein. Je nach Ausgestaltung kann es sich bei dieser Ausnehmung auch um die ohnehin zur Aufnahme der Rückwand dienende Nut innerhalb der Plattenelemente handeln.

In Bezug auf die Ausgestaltung der Kopplungsmittel kann die erste Randleiste des ersten Plattenelements in die innere Seitenfläche des ersten Plattenelements übergehen. Auf diese Weise geht die innere Seitenfläche des ersten Plattenelements im zusammengesetzten Zustand der Plattenelemente direkt in die zweite Nut des zweiten Plattenelements über. Hierdurch wird eine möglichst große Beabstandung der einzelnen Teile der Kopplungsmittel erreicht, wobei die so vergrößerten inneren Hebelarme zu einer Reduzierung der auftretenden Spannungen im Verbindungsbereich zwischen den Plattenelementen führt.

Je nach Anforderung und insbesondere bei dickeren verwendeten Plattenelementen kann die erste Randleiste auch zu der inneren Seitenfläche des ersten Plattenelements beabstandet sein. Der somit von der ersten Randleiste zur inneren Seitenfläche des ersten Plattenelements aufgehende Teil kann hierbei eine zusätzliche Teilfläche zur Verfügung stellen, gegen welche sich das zweite Plattenelement innerhalb des Plattenverbundes abstützen kann. Auf diese Weise sind die im Verbindungsbereich zwischen den Plattenelementen auftretenden Kräfte auf weitere Teilflächen übertragbar, wodurch sich die jeweiligen Belastungen durch Reduzierung der Spannungen ebenfalls mindern lassen.

Die vorliegende Erfindung zeigte eine überaus einfache Möglichkeit zur Herstellung eines leimlosen Plattenverbundes sowie dessen notwendiger Plattenelemente auf, welcher innerhalb kürzester Zeit herstellbar und sowohl zusammensteckbar als auch problemlos zerlegbar ist.

Insbesondere die insgesamt robuste Ausgestaltung der einzelnen Kopplungsmittel ermöglicht eine überaus haltbare Verbindung zwischen den Plattenelementen, welche auch nach mehreren Füge- und Löseprozessen der Verbindung eine haltbare Kopplung ermöglicht. Der Verzicht auf etwaige elastisch ausgebildete Teile der Kopplungsmittel ermöglicht eine praxisnahe Handhabung, ohne übertriebene Vorsicht beim Zusammensetzen des Plattenverbundes. Auf diese Weise ist auch eine mögliche Überbeanspruchung der ansonsten elastisch ausgestalteten und somit zumeist filigran ausgeführten Teile der Kopplungsmittel während des Zusammensetzens oder Zerlegens sowie der Lagerung ausgeschlossen. Damit einhergehende Ermüdungserscheinungen sind dank der robusten Ausführung der Kopplungsmittel nicht zu erwarten.

Insgesamt schafft der leimlose Plattenverbund eine optisch ansprechende sowie praxisnahe Möglichkeit für die rasche Komplettierung einzelner Plattenelemente zu einem Plattenverbund. Auch die bei Bedarf erfolgende Zerlegung des Plattenverbundes geht ohne die Notwendigkeit zur Verdrängung oder Verbiegung etwaiger Teile der Kopplungsmittel einher, da diese lediglich eine Relativbewegung der miteinander verbundenen Plattenelemente in jeweils entgegengesetzte Richtung erfordert.

Nachfolgend wird eine erfindungsgemäße Lösung zur leimlosen Verbindung wenigstens zweier Plattenelemente zu einem Plattenverbund aufgezeigt.

Die Lösung besteht in einem Verfahren zum leimlosen Verbinden wenigstens zweier Plattenelemente zu einem Plattenverbund, welche dabei einen Winkel ungleich 180 Grad zwischen sich einschließen. Besagte Plattenelemente weisen hierfür miteinander in Eingriff bringbare Kopplungsmittel auf, welche einzelne Randleisten umfassen, die in einzelne Leistenabschnitte unterteilt sind.

Für die Verbindung werden die Plattenelemente zunächst so lange einander angenähert, bis zumindest einer der ersten Leistenabschnitte des ersten Plattenelements zwischen zwei der zweiten Leistenabschnitte des zweiten Plattenelements hindurchgeglitten ist und in Ebene einer an einem inneren Randbereich des zweiten Plattenelements angeordneten zweiten Nut und wenigstens einer der zweiten Leistenabschnitte in Ebene einer an einer ersten Stirnseite des ersten Plattenelements angeordneten ersten Nut gelegen ist. Sobald die jeweiligen Leistenabschnitte die Ebene der jeweiligen Nuten erreicht haben, werden die miteinander zu verbindenden Plattenelemente anschließend über eine begrenzte Relativbewegung zueinander entgegengesetzt zueinander verlagert.

Besagte Relativbewegung findet dabei in einer parallel zu einer Längsrichtung der ersten oder der zweiten Stirnseite verlaufenden Verriegelungsrichtung statt. Die Relativbewegung wird dabei so lange durchgeführt, bis der erste Leistenabschnitt zumindest abschnittsweise in der zweiten Nut und der zweite Leistenabschnitt zumindest abschnittsweise in der ersten Nut angeordnet sind. In dieser Lage hinterschneiden sich die so hintereinander geschobenen Leistenabschnitte zumindest abschnittsweise, so dass eine Trennung der miteinander verbundenen Plattenelemente aufgrund der ausgebildeten Hinterschneidungen nicht mehr möglich ist.

Der besondere Vorteil besteht darin, dass hierdurch eine haltbare Verbindung zwischen den Plattenelementen unter Verzicht auf elastisch, insbesondere federnd ausgeführte Teile der Verbindungsmittel ermöglicht ist. Die im Stand der Technik bekannten Maßnahmen zur Ausbildung eines solchen Plattenverbundes erfordern zumeist das Überbrücken einer etwaigen Haltekraft, welche im Anschluss die miteinander verbundenen Plattenelemente gegen unerwünschtes Lösen der Verbindung sichert. Mit anderen Worten muss hierbei zunächst ein Widerstand überwunden werden, bei dem beispielsweise ein Bereich der Kopplungsmittel elastisch verdrängt wird, um nach seiner Rückverformung im verbundenen Zustand der Plattenelemente beispielsweise mit einer Hinterschneidung zu korrespondieren. Um eine derartig realisierte Verbindung wieder aufzulösen, sind zumeist entsprechend hohe Kräfte notwendig, welche nicht selten zur Zerstörung oder zumindest zur Schwächung der weiteren Verbindungsmöglichkeit der so voneinander getrennten Plattenelemente führt.

Die Erfindung sieht weiterhin vor, dass das zweite Plattenelement eine an seiner zweiten Stirnseite angeordnete Kopfleiste aufweist. Die Kopfleiste erstreckt sich dabei in Längsrichtung der zweiten Stirnseite. Demgegenüber kann das erste Plattenelement einen an seiner Zunge ausgebildeten Kuppelkanal besitzen, welcher mit der Kopfleiste des zweiten Plattenelements korrespondiert. Diese Teile der Kopplungsmittel sind dafür vorgesehen, dass am Ende der Annäherung der Plattenelemente die Kopfleiste des zweiten Plattenelements in den Kuppelkanal des ersten Plattenelements greift. Hierbei erstreckt sich der Kuppelkanal des ersten Plattenelements selbstverständlich ebenfalls parallel zur Längsrichtung der ersten Stirnseite. Während der anschließenden Relativbewegung der beiden Plattenelemente wird die Kopfleiste folglich innerhalb des Kuppelkanals parallel zur Längsrichtung der Stirnseiten verschoben.

Neben der so erzeugten eindeutigen Führung der Plattenelemente während der Relativbewegung sind hierdurch weitere Teile der Verbindungsmittel geschaffen, um die auftretenden Belastungen des Plattenverbundes sicher aufnehmen zu können.

In einer Weiterbildung können die Kopplungsmittel ferner einen zusätzlichen Vorsprung und eine damit korrespondierende Ausnehmung besitzen. In diesem Zusammenhang ist vorgesehen, dass während der Relativbewegung der Wandelemente zueinander in Verriegelungsrichtung der jeweils an den Kopplungsmitteln angeordnete Vorsprung in die ebenfalls an den Kopplungsmitteln angeordnete Ausnehmung greift.

Der besondere Vorteil besteht hier in einer zunächst ohne nennenswerten Widerstand erfolgenden Annäherung der Wandelemente, woraufhin die eigentliche, insbesondere haltbare Verbindung zwischen den Plattenelementen über die Verriegelungsbewegung in Verriegelungsrichtung erfolgt. So gelangen erst bei der Relativbewegung der Plattenelemente zueinander die eine Hinterschneidung aufweisenden Leistenabschnitte der Kopplungsmittel und je nach Ausgestaltung auch der jeweilige Vorsprung mit einer entsprechenden Ausnehmung miteinander in Eingriff.

Da hierbei kein nennenswerter Widerstand zu überbrücken ist, wird hierdurch eine insgesamt Material schonende Art der Verbindung von Plattenelementen ermöglicht. Demgegenüber erfolgt das Lösen einer solchen Verbindung ebenfalls über eine Relativbewegung der miteinander verbundenen Plattenelemente, welche beispielsweise sowohl entgegen der Verriegelungsrichtung als auch in deren Fortführung erfolgen kann. Die Trennung der beiden Plattenelemente wird grundsätzlich dadurch erreicht, dass die ersten und zweiten Leistenabschnitte durch die Relativbewegung der Plattenelemente so gegeneinander versetzt werden, dass diese bei einer von einander weg erfolgenden Bewegung der Plattenelemente kämmend aneinander vorbei gleiten.

In einer Weiterführung des grundsätzlichen Erfindungsgedankens können die Kopplungsmittel wenigstens eines Plattenelements zumindest bereichsweise reibungsmindernd ausgeführt sein. Dies vor dem Hintergrund einer möglichst einfachen Verbindung der Plattenelemente, welche als Folge der Relativbewegung und damit einhergehendem Hintereinandergreifen der Leistenabschnitte entsteht. Hierfür können die Kopplungsmittel entweder möglichst gleitfähig ausgebildet sein oder aber eine entsprechende Beschichtung aufweisen. Selbstverständlich kann die angestrebte Gleitfähigkeit der miteinander zu verbindenden Plattenelemente auch erst kurz vor deren Kopplung miteinander bewirkt werden, beispielsweise durch Einsatz eines geeigneten Gleitmittels.

Ziel ist es, die zum Teil hohe Haftreibung in den sich berührenden Bereichen der Plattenelemente, insbesondere der Kopplungsmittel, herabzusetzen, um die eigentliche Verriegelungsbewegung zu erleichtern. Neben einer möglichst glatten Oberflächengestaltung besagter Bereiche, beispielsweise indem diese eine hohe Dichte des eigentlichen Plattenmaterials sowie eine geeignete Oberflächenbearbeitung aufweisen, können diese auch die Reibung herabsetzende Beschichtungen aus einem unterschiedlichen Werkstoff besitzen. Bei einer solchen Beschichtung kann es sich beispielsweise um einen Lack oder einen Kunststoff handeln. Diese bilden eine selbsthaftende Beschichtung, welche vorzugsweise auch nach mehreren Verriegelungs- und Entriegelungsbewegungen der Plattenelemente keinem nennenswerten Verschleiß unterliegen. Demgegenüber kann die Beschichtung auch als Gleitmittel ausgebildet sein, welches wiederum nicht fest mit den in Rede stehenden Bereichen verbunden ist, sondern in Form eines Schmierstoffs an diesen haftet.

Neben der auf diese Weise herabgesetzten Gleitreibung zwischen den miteinander zu- oder entkoppelnden Plattenelementen ist weiterhin auch eine Beeinflussung der Haftreibung innerhalb der Verbindung denkbar. So können die miteinander in Berührung stehenden Bereiche zumindest bereichsweise eine erhöhte Haftreibung aufweisen, so dass die durch die Verriegelungsbewegung geschaffene Verbindung zwischen den Plattenelementen nicht ohne weiteres auflösbar ist. Mit anderen Worten muss zu deren gewünschten Trennung voneinander die im Verbindungsbereich gezielt eingestellte Haftreibung überwunden werden, um die einzelnen Leistenabschnitte aus ihren, die Hinterschneidungen bildenden Positionen herauszubewegen. Je nach Ausgestaltung der so erhöhten Haftreibung wären demnach sowohl die Verriegelungs- als auch die Entriegelungsbewegung gehemmt. Weiterhin können die so geschaffenen Gleitmittel auch so eingestellt sein, dass die jeweilige Reibung richtungsabhängig unterschiedlich ist. Bevorzug wäre hierbei die Gleitreibung während der Verriegelungsbewegung herabgesetzt, wohingegen diese in entgegengesetzte Entriegelungsrichtung erhöht ist. Zeitgleich kann die Haftreibung im miteinander verbundenen Zustand der Plattenelemente auf diese Weise ebenfalls erhöht sein.

Denkbar ist, dass die in Rede stehenden Verbindungsbereiche zumindest teilweise mit einem Mittel versehen sind, welches seine Eigenschaften über einen einstellbaren Zeitraum hinweg verändert. So kann dieses Mittel beispielsweise während der Verriegelungsbewegung zunächst als Gleitmittel fungieren, während es im gekoppelten Zustand der Plattenelemente miteinander seine Gleitfähigkeit herabsetzt oder gar verliert oder zu einer adhäsiven Wirkung hin verändert. In diesem Zusammenhang kann das in Rede stehende Mittel beispielsweise mit der Zeit verharzen, wodurch die geschaffene Verbindung zwischen den Plattenelementen adhäsiv verstärkt ist.

Grundsätzlich kann die geforderte Gleitfähigkeit im Verbindungsbereich auch durch zusätzliche Bauteile eingestellt sein, welche zumindest bereichs- oder abschnittsweise angeordnet sind. Denkbar hierfür sind beispielsweise Gleitstreifen in Form von Kunststoffbändern, welche beispielsweise in der Nut und/oder dem Kuppelkanal angeordnet sind, so dass die entsprechende Randleiste bzw. die entsprechenden Leistenabschnitte sowie die Kopfleiste auf einem der Kunststoffbänder gleiten.

Besagte Kunststoffbänder können entweder locker eingelegt oder aber mit den betreffenden Bereichen der Plattenelemente verbunden sein. Im letzten Fall können diese auch an den in die Nut und/oder den Kuppelkanal eingreifende Teilen der Kopplungsmittel angeordnet sein. Neben einer ebenen oder dem Verlauf des Kuppelkanals angepassten Querschnittsausgestaltung können besagte Kunststoffbänder auch eine U-Form besitzen, so dass diese auch die jeweiligen Flanken der Kopplungsmittel zumindest bereichsweise bedecken. In diesem Zusammenhang ist auch denkbar, dass ein solches Kunststoffband in Form eines Einlegers an die gesamte Querschnittsausgestaltung der Kopplungsmittel eines Plattenelements angepasst ist.

Mit etwaigen quellenden Eigenschaften versehen, könnte so eine überaus gleitfähige Verbindung geschaffen werden, welche über einen bestimmten Zeitraum hinweg durch eine Querschnittszunahme eine überaus feste Verbindung der Plattenelemente untereinander bewirkt. Die Querschnittszunahme könnte dabei so eingestellt sein, dass eine etwaige Entriegelungsbewegung zum Trennen der Plattenelemente entweder erschwert oder gar verhindert ist.

Die Erfindung wird nachfolgend anhand einiger in den Figuren schematisch dargestellter Ausführungsbeispiele näher erläutert. Es zeigen:
- Figur 1: einen nicht erfindungsgemäßen leimlosen Plattenverbund in perspektivischer Darstellungsweise;
- Figur 2: den Detailausschnitt eines Verbindungsbereichs des Plattenverbundes aus Figur 1 in einer Ansicht;
- Figur 3: ein erstes Plattenelement des Details aus Figur 2 in derselben Darstellungsweise;
- Figur 4: ein weiteres Plattenelement des Details aus Figur 2 in derselben Darstellungsweise;
- Figur 5: das Plattenelement aus Figur 3 in perspektivischer Darstellungsweise;
- Figur 6: das Plattenelement aus Figur 4 in perspektivischer Darstellung;
- Figur 7: das Detail aus Figur 2 in einer erfindungsgemäßen Ausgestaltung in derselben Darstellungsweise;
- Figur 8: ein Plattenelement der erfindungsgemäßen Ausgestaltung aus Figur 7 in derselben Darstellungsweise;
- Figur 9: ein weiteres Plattenelement der erfindungsgemäßen Ausgestaltung aus Figur 7 in derselben Darstellungsweise;
- Figur 10: eine alternative, nicht erfindungsgemäße Ausgestaltung des Details aus Figur 2 in derselben Darstellungsweise,
- Figur 11: eine erfindungsgemäße Ausgestaltung des Details aus Figur 7 in derselben Darstellungsweise sowie
- Figur 12: einen Detailausschnitt eines nicht erfindungsgemäßen Plattenverbundes in perspektivischer Darstellungsweise.

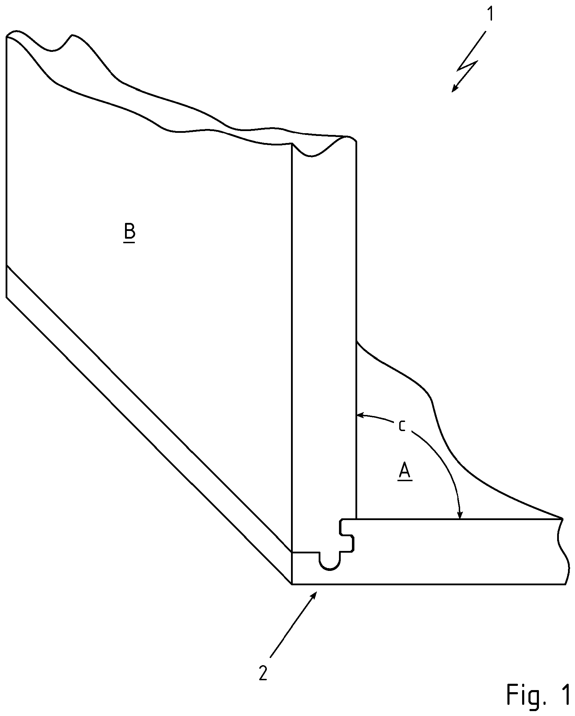

- Figur 1: zeigt einen nicht erfindungsgemäßen leimlosen Plattenverbund 1 in einer perspektivischen Darstellung. Der Plattenverbund 1 umfasst ein erstes Plattenelement A sowie ein zweites Plattenelement B, welche über an diesen angeordnete Kopplungsmittel 2 miteinander verbunden sind. Zur besseren Verdeutlichung sind vorliegend die beiden Plattenelemente A, B auf ihre Bereiche nahe der Kopplungsmittel 2 reduziert und somit nur teilweise dargestellt.

Die miteinander verbundenen Plattenelemente A, B sind so zueinander ausgerichtet, dass sie einen Winkel c ungleich 180 Grad zwischen sich einschließen. Vorliegend ist ein Winkel c von 90 Grad gezeigt.

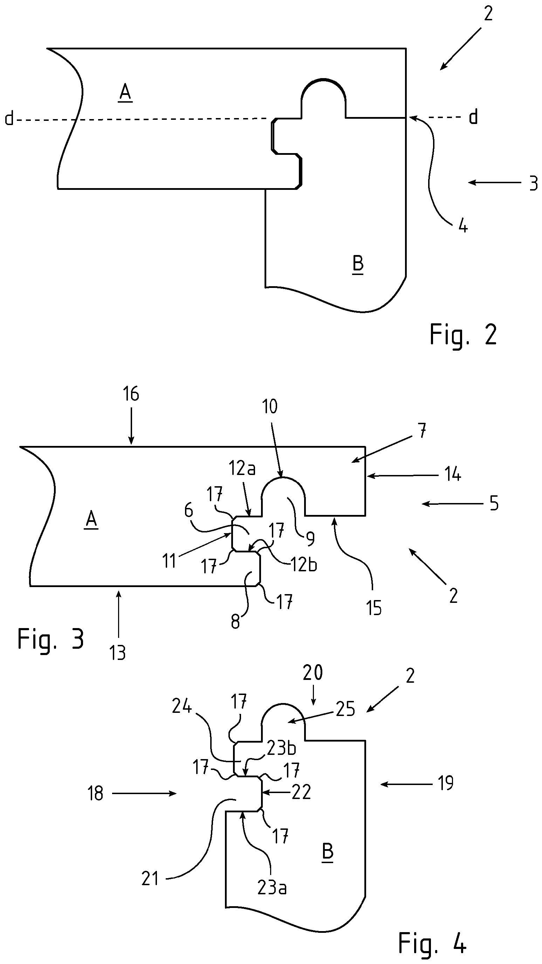

Figur 2 zeigt den Verbindungsbereich des Plattenverbundes 1 aus Figur 1 in einer Detailansicht. Wie zu erkennen, verläuft eine Verbindungsebene d zwischen dem ersten Plattenelement A und dem zweiten Plattenelement B, welche von einer Außenseite 3 des Plattenverbundes 1 aus optisch als Trennfuge 4 wahrnehmbar ist.

Figur 3 zeigt das erste Plattenelement A der Figur 2 in einer von dem zweiten Plattenelement B separierten Darstellung. Wie zu erkennen, umfasst das erste Plattenelement A eine erste Stirnseite 5, in welches eine in das erste Plattenelement A hinein gerichtete erste Nut 6 angeordnet ist. Die erste Nut 6 ist seitlich jeweils durch eine Zunge 7 und eine gegenüber der Zunge 7 zurückspringende erste Randleiste 8 begrenzt.

Die Zunge 7 weist ferner einen in diese hinein gerichteten Kuppelkanal 9 auf, welcher in Bezug auf seine Ausrichtung um 90 Grad zu der ersten Nut 6 versetzt ist und an diese angrenzt. Der Kuppelkanal 9 ist so ausgestaltet, dass dieser einen ausgerundeten Grund 10 besitzt. Demgegenüber ist die erste Nut 6 so ausgestaltet, dass deren Grund 11 rechtwinklig zu parallel zueinander ausgerichteten Flanken 12a, 12b der ersten Nut 6 ausgerichtet ist.

Die mit Blick auf die Darstellung der Figur 3 untere Flanke 12b der ersten Nut 6 bildet gleichzeitig eine Seite der ersten Randleiste 8, welche einer inneren Seitenfläche 13 des ersten Plattenelements A gegenüber liegt. Vorliegend weist besagte Flanke 12b einen parallelen Verlauf zu der inneren Seitenfläche 13 des ersten Plattenelements A auf. Der in der Zunge 7 angeordnete Kuppelkanal 9 ist zu einem am Ende der Zunge 7 gelegenen Kopfbereich 14 hin beabstandet, so dass sich ein zu der inneren Seitenfläche 13 des ersten Plattenelements A hin gerichteter erster Teilbereich 15 ergibt. Weiterhin ist der erste Teilbereich 15 parallel zu einer der inneren Seitenfläche 13 des ersten Plattenelements A gegenüberliegenden äußeren Seitenfläche 16 ausgerichtet. Somit gehen der erste Teilbereich 15 und der Kopfbereich 14 der Zunge 7 rechtwinklig ineinander über.

Die Zunge 7 ist an ihrem dem ersten Teilbereich 15 gegenüberliegenden Bereich so ausgestaltet, dass sie in die äußere Seitenfläche 16 nahtlos und ohne etwaigen Versprung übergeht. In gleicher Weise ist auch die der Flanke 12b der ersten Nut 6 gegenüberliegende Seite der ersten Randleiste 8 so ausgebildet, dass diese ohne Versprung nahtlos in die innere Seitenfläche 13 des ersten Plattenelements A übergeht.

Sowohl die erste Randleiste 8 als auch die erste Nut 6 weisen an diesen angeordnete Fasen 17 auf, wobei die erste Randleiste 8 über die Fasen 17 sowohl in die untere Flanke 12b der ersten Nut 6 als auch in die innere Seitenfläche 13 des ersten Plattenelements A übergeht, während der Grund 11 der ersten Nut 6 über die Fasen 17 in die Flanken 12a, 12b der ersten Nut 6 übergeht.

Figur 4 zeigt das entsprechende Gegenstück zu dem ersten Plattenelement A aus Figur 3 in Form des zweiten Plattenelements B. Gegenüber Figur 2 ist dieses vorliegend ebenfalls aus dem Plattenverbund 1 herausgenommen, wodurch sich die Ausbildung seiner Kopplungsmittel 2 verdeutlicht. Das zweite Plattenelement B weist einen inneren Randbereich 18 und einen dem inneren Randbereich 18 gegenüberliegenden äußeren Randbereich 19 auf, zwischen denen sich endseitig eine zweite Stirnseite 20 des zweiten Plattenelements B erstreckt. Der innere Randbereich 18 und der äußere Randbereich 19 des zweiten Plattenelements B schließen sich unmittelbar an die zweite Stirnseite 20 an.

Wie zu erkennen, weist der innere Randbereich 18 eine zweite Nut 21 auf, welche einen parallel zum inneren Randbereich 18 verlaufenden Grund 22 und von diesem zu dem inneren Randbereich 18 hin aufgehende Flanken 23a, 23b besitzt. Vorliegend sind die Flanken 23a, 23b der zweiten Nut 21 parallel zueinander ausgerichtet und jeweils rechtwinklig zum inneren Randbereich 18 angeordnet. Die zweite Nut 21 ist seitlich über eine zweite Randleiste 24 zu der zweiten Stirnseite 20 hin beabstandet, wobei die beiden Seiten der zweiten Randleiste 24 durch die mit Blick auf die Darstellung der Figur 2 obere Flanke 23b der zweiten Nut 21 und einen der Flanke 23b gegenüberliegenden Teil der zweiten Stirnseite 20 gebildet sind. Vorliegend geht die zweite Randleiste 24 somit in die zweite Stirnseite 20 über.

Analog der Ausgestaltung des ersten Plattenelements A aus Figur 3 weist das zweite Plattenelement B der Figur 4 ebenfalls einzelne Fasen 17 auf, über welche sowohl der Grund 22 der zweiten Nut 21 in deren Flanken 23a, 23b und die zweite Randleiste 24 in die obere Flanke 23b der zweiten Nut 21 und den der Flanke 23b gegenüberliegenden Bereich der zweiten Stirnseite 20 übergehen.

An der zweiten Stirnseite 20 ist ferner eine Kopfleiste 25 angeordnet, welche sich über die zweite Stirnseite 20 des zweiten Plattenelements B hinaus erstreckt. Mit Blick auf die Darstellung der Figur 2 wird deutlich, dass die Kopfleiste 25 im gekoppelten Zustand der beiden Plattenelemente A, B in dem Kuppelkanal 9 angeordnet ist. Weiterhin ist die Kopfleiste 25 so ausgebildet, dass sie an die Form des Kuppelkanals 9, insbesondere an den gerundeten Grund 10, formangepasst ist. Ferner wird deutlich, dass die Zunge 7 des ersten Plattenelements A in dessen gekoppelten Zustand mit dem zweiten Plattenelement B dessen zweite Stirnseite 20 vollständig verdeckt.

Die aus den Figuren 3 und 4 hervorgehenden Kopplungsmittel 2 sind allesamt so ausgestaltet, dass sie eine steife Ausbildung aufweisen. Mit anderen Worten weisen die einzelnen Teile der Kopplungsmittel derartige Querschnitte auf, dass diese nicht gezielt für eine etwaige Nachgiebigkeit ausgebildet sind.

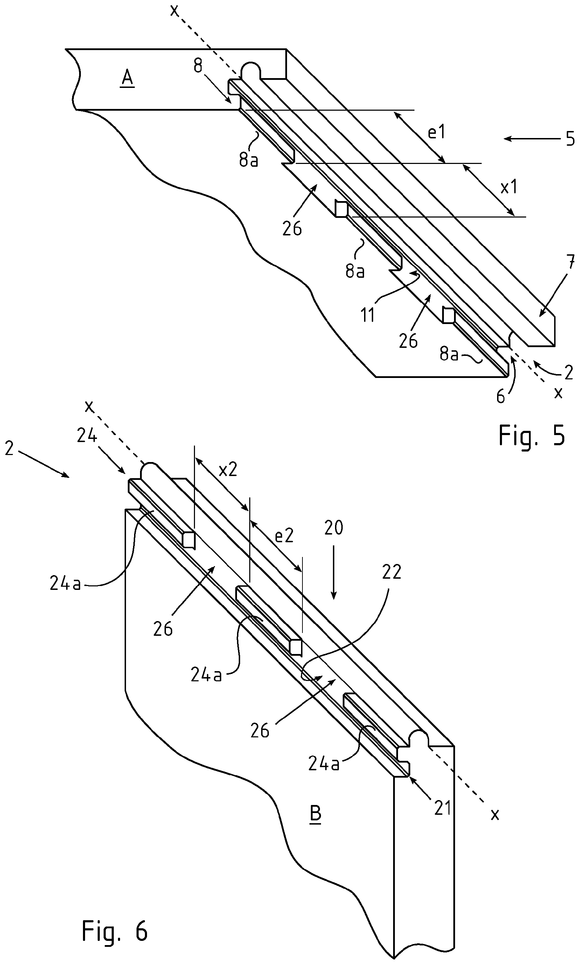

Figur 5 zeigt das einzelne erste Plattenelement A aus Figur 3 in einer perspektivischen Ansicht. Wie zu erkennen, erstrecken sich dessen Kopplungsmittel 2 jeweils parallel zu einer Längsrichtung x der ersten Stirnseite des ersten Plattenelements A. In dieser Ansicht wird deutlich, dass die erste Randleiste 8 nicht durchgehend ist, sondern in einzelne erste Leistenabschnitte 8a unterteilt ist. Die einzelnen ersten Leistenabschnitte 8a sind durch einzelne Ausnehmungen 26 realisiert, welche bis auf den Grund 11 der ersten Nut 6 reichen. Hierdurch ist die erste Randleiste 8 in den Bereichen der Ausnehmungen 26 vollständig entfernt. Die einzelnen Ausnehmungen 26 bewirken, dass die verbliebenen ersten Leistenabschnitte 8a in einem Abstand x1 voneinander parallel zur Längsrichtung x angeordnet sind. Die so verbliebenen ersten Leistenabschnitte 8a weisen eine parallel zur Längsrichtung x gemessene Länge e1 auf.

Figur 6 zeigt das Gegenstück zu dem in Figur 5 darstellten ersten Plattenelement A in Form des zweiten Plattenelements B. Entgegen der Darstellung in Figur 4 ist dieses vorliegend ebenfalls perspektivisch dargestellt. In dieser Darstellung wird weiterhin deutlich, dass auch deren Kopplungsmittel 2 sich parallel zu einer Längsrichtung x der zweiten Stirnseite 20 des zweiten Plattenelements B erstrecken. Insbesondere die zweite Randleiste 24 ist ebenfalls durch einzelne Ausnehmungen 26 unterbrochen, so dass auch die zweite Randleiste 24 in einzelne zweite Leistenabschnitte 24a unterteilt ist. Durch die Ausnehmungen 26 ist die zweite Randleiste 24 ebenfalls bis auf Ebene des Grundes 22 der zweiten Nut 21 vollständig entfernt. Die verbliebenen zweiten Leistenabschnitte 24 sind hierdurch ebenfalls in einem Abstand x2 zueinander angeordnet. Die zweiten Leistenabschnitte 24a besitzen eine sich zwischen den Ausnehmungen 26 erstreckende und parallel zur Längsrichtung x der zweiten Stirnseite 20 gemessene Länge e2.

Mit Blick auf die Figuren 5 und 6 ist erkennbar, dass die ersten Leistenabschnitte 8a des ersten Plattenelements A in Bezug auf ihren Abstand x1 untereinander der Länge e2 der zweiten Leistenabschnitte 24a des zweiten Plattenelements B entsprechen. Demgegenüber ist auch der Abstand x2 der zweiten Leistenabschnitte 24a des zweiten Plattenelements B so eingestellt, dass dieser der jeweiligen Länge e1 der ersten Leistenabschnitte 8a des ersten Plattenelements A entspricht. In jedem Fall sind die einzelnen Leistenabschnitte 8a, 24a so zueinander angeordnet und ausgebildet, dass im gekoppelten Zustand der beiden Plattenelemente A, B die ersten Leistenabschnitte 8a und die zweiten Leistenabschnitte 24a sich zumindest bereichsweise hinterschneiden. Hierbei sind die ersten Leistenabschnitte 8a des ersten Plattenelements A in der zweiten Nut 21 des zweiten Plattenelements B angeordnet, während die zweiten Leistenabschnitte 24a des zweiten Plattenelements B in der ersten Nut 6 des ersten Plattenelements A angeordnet sind.

Wie bereits in den Figuren 1 und 2 deutlich gemacht, sind hierfür die ersten Leistenabschnitte 8a an die zweite Nut 21 und die zweiten Leistenabschnitte 24a an die erste Nut 6 jeweils formangepasst. Auf diese Weise ergibt sich ein möglichst strammer Sitz im gekoppelten Zustand der beiden Plattenelemente A, B.

Um die Kopplung der beiden Plattenelemente A, B zu vollziehen, werden diese zunächst so lange einander angenähert, bis zumindest einer der ersten Leistenabschnitte 8a des ersten Plattenelements A zwischen zwei der zweiten Leistenabschnitte 24a des zweiten Plattenelements B hindurchgeglitten sind. Hierbei gleiten die jeweiligen Leistenabschnitte 8a, 24a aneinander vorbei, indem sie zwischen den jeweiligen Ausnehmungen 26 des jeweils anderen Plattenelements A, B hindurchgeführt werden. Die auf diese Weise vollzogene Annäherung der beiden Plattenelemente A, B findet so lange statt, bis die Leistenabschnitte 8a, 24a eines der Plattenelemente A, B in Ebene der Nut 6, 21 des jeweils anderen Plattenelements A, B liegen. Hierbei treten auch die Kopfleiste 25 des zweiten Plattenelements B und der entsprechende Kuppelkanal 9 des ersten Plattenelements A miteinander in Kontakt, wobei diese beim Erreichen der Ebenen der jeweiligen Nut 6, 21 durch die entsprechenden Leistenabschnitte 8a, 24a vollständig miteinander in Eingriff gelangen.

Anschließend findet eine begrenzte Relativbewegung der beiden Plattenelemente A, B zueinander statt, welche in eine parallel zur Längsrichtung x der Stirnseiten 5, 20 verlaufende Verriegelungsrichtung erfolgt. Hierbei werden die beiden Plattenelemente A, B entgegengesetzt zueinander verlagert, bis wenigstens einer der ersten Leistenabschnitte 8a zumindest abschnittsweise in der zweiten Nut des zweiten Plattenelements und somit auch der zweite Leistenabschnitt 24a des zweiten Plattenelements zumindest abschnittsweise in der ersten Nut 6 des ersten Plattenelements A angeordnet ist. Auf diese Weise hinterschneidet wenigstens einer der ersten Leistenabschnitte 8a einen der zweiten Leistenabschnitte 24a, wodurch eine haltbare Verbindung zwischen den beiden Plattenelementen A, B geschaffen ist.

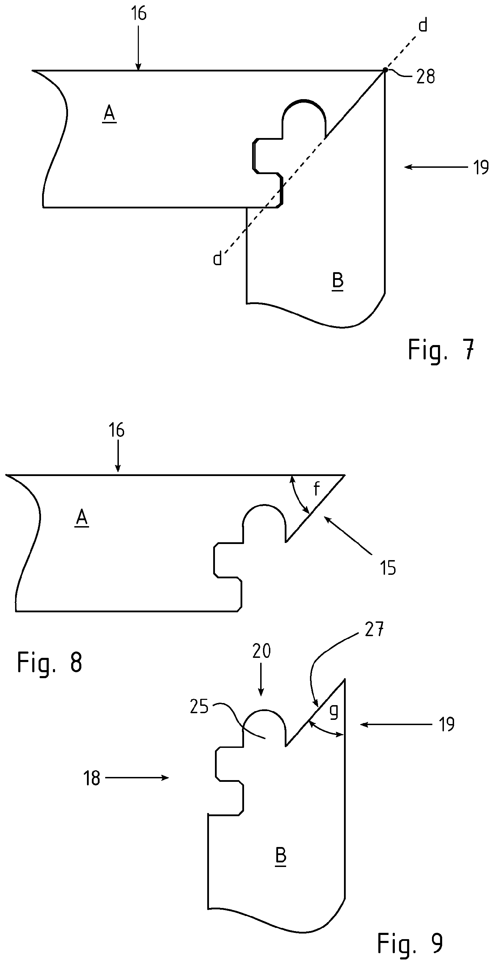

Figur 7 stellt eine erfindungsgemäße Ausgestaltungsform des Verbindungsbereichs zwischen den Plattenelementen A, B dar, bei welcher die Verbindungsebene d gegenüber der Darstellung in Figur 2 geneigt ist. Die hierfür ursächlichen Ausgestaltungen der beiden Plattenelemente A, B sind Inhalt der nachfolgenden Figuren 8 und 9.

Figur 8 zeigt die Ausgestaltung des ersten Plattenelements A, bei welchem der erste Teilbereich 15 derart gegenüber der äußeren Seitenfläche 16 geneigt ist, dass diese einen ersten Winkel f von kleiner 90 Grad zwischen sich einschließen. Vorliegend beträgt der Winkel f über 45 Grad, so dass die Verbindungsebene d die im Schnitt der inneren Seitenfläche 13 und dem inneren Randbereich 18 gelegene innere Ecke nicht exakt schneidet.

Demgegenüber weist auch das zweite Plattenelemente B in Figur 9 einen geneigten Teilbereich 27 der zweiten Stirnseite 20 auf, welcher sich zwischen der Kopfleiste 25 und dem äußeren Randbereich 19 des zweiten Plattenelements B erstreckt. Der Teilbereich 27 und der äußere Randbereich 19 des zweiten Plattenelements B schließen ebenfalls einen Winkel g von kleiner 90 Grad zwischen sich ein. Vorliegend ist der Winkel g auf unter 45 Grad eingestellt.

Selbstverständlich kann der Winkel g identisch mit dem Winkel f des ersten Plattenelements A ausgeführt sein. Ferner kann die Verbindungsebene d auch die innere Ecke schneiden.

Mit Bezug auf Figur 7 sind die beiden Teilbereiche 15, 27 derart geneigt, dass im verbundenen Zustand der beiden Plattenelemente A, B die zwischen dem ersten Teilbereich 15 und dem zweiten Teilbereich 27 verlaufende Verbindungsebene d eine äußere Ecke 28 des Plattenverbundes 1 schneidet. Die äußere Ecke 28 liegt dabei im Schnittpunkt einer an den äußeren Randbereich 19 des zweiten Plattenelements B angelegten Ebene und einer an die äußere Seitenfläche 16 des ersten Plattenelements A angelegten Ebene.

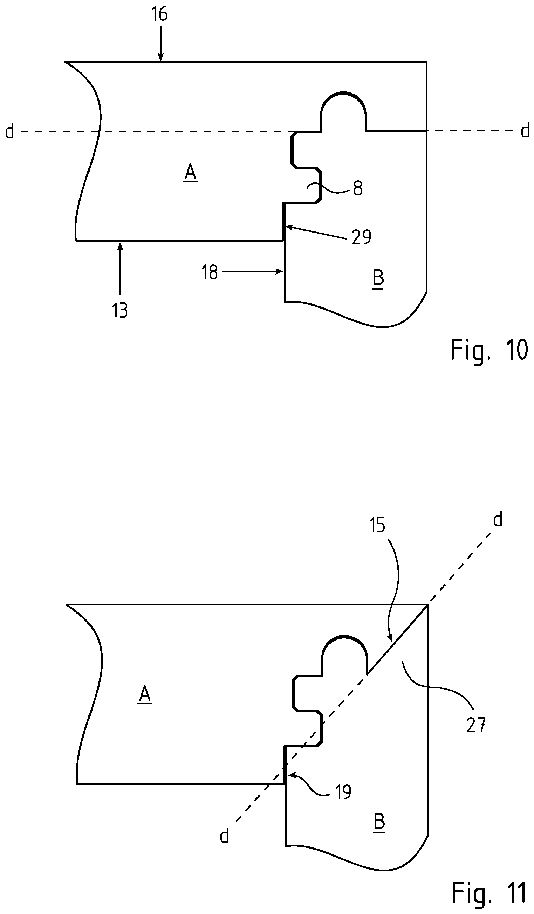

Figur 10 zeigt eine weitere nicht erfindungsgemäße Ausgestaltung des Verbindungsbereichs zwischen den Plattenelementen A, B. Wie zu erkennen, ist vorliegend die innere Seitenfläche 13 des ersten Plattenelements A weiter zu dessen äußere Seitenfläche 16 hin beabstandet, so dass die erste Randleiste 8 nicht in einer Ebene in die innere Seitenfläche 13 des ersten Plattenelements A übergeht. Durch die Beabstandung der inneren Seitenfläche 13 ergibt sich ein Versatz in Form einer Stufe 29, welche in gekoppelten Zustand der beiden Plattenelemente A, B an dem inneren Randbereich 18 des zweiten Plattenelements B anliegt. Die Anordnung der Stufe 29 ist vorliegend mit der Ausgestaltung des Verbindungsbereichs aus Figur 2 kombiniert, wobei die Verbindungsebene d parallel zur äußeren Seitenfläche 16 des ersten Plattenelements A verläuft.

Aus Figur 11 geht ebenfalls die Anordnung der Stufe 29 an dem ersten Plattenelement A hervor, wohingegen die Verbindungsebene d gegenüber der Darstellung in Figur 10 geneigt ist und in Bezug auf den ersten Teilbereich 15 und den zweiten Teilbereich 27 der Ausgestaltung in den Figuren 7 bis 9 entsprechen.

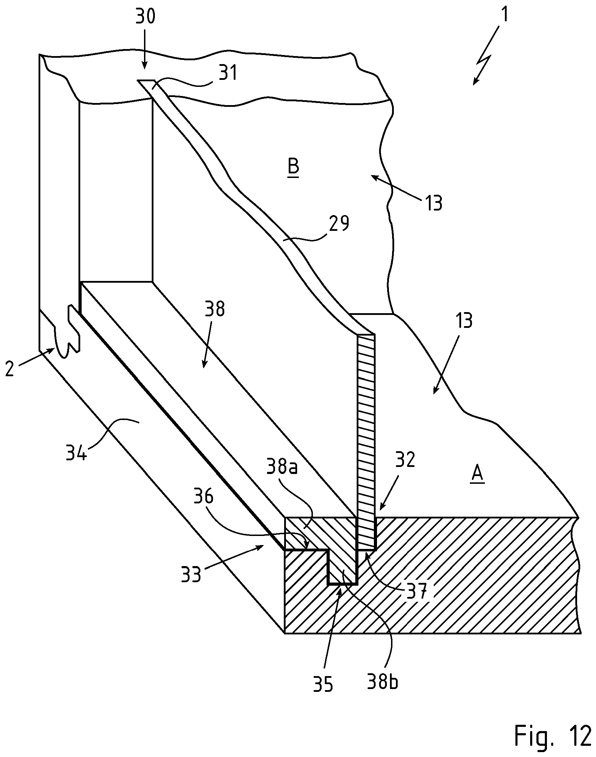

Figur 12 zeigt den nicht erfindungsgemäßen Plattenverbund 1 aus dem ersten Plattenelement A und dem zweiten Plattenelement B in einem perspektivischen Ausschnitt. Wie zu erkennen, ist der Plattenverbund 1 durch eine zusätzliche Rückwand 29 ergänzt. Hierfür weist das mit Blick auf die Darstellung der Figur 12 senkrecht aufgehende zweite Plattenelement B eine Nut 30 auf, innerhalb derer die Rückwand 29 mit einem seitlichen Randbereich 31 angeordnet ist. Weiterhin weist auch das mit Blick auf die Darstellung der Figur 12 untere, horizontal ausgerichtete erste Plattenelement A eine weitere Nut 32 auf, welche mit der Nut 30 des zweiten Plattenelements B fluchtet. Sofern mehrere Plattenelement A, B zu einem in sich geschlossenen Rahmen zusammengesetzt sind, können entsprechende Nuten 30, 32 in nicht näher dargestellte Weise umlaufend innerhalb diesem zur Aufnahme der Rückwand 29 angeordnet sein.

Um einen nicht näher dargestellten, zusammengesetzten Rahmen aus wenigstens drei Plattenelementen A, B mit einer solchen Rückwand 29 auszustatten, ist deren Anordnung innerhalb einzelner Nuten 30, 32 erforderlich, bevor das jeweils letzte Plattenelement A, B den zu fertigenden Rahmen schließt. Um die notwendige Relativbewegung zum Verriegeln der Plattenelemente A, B zuzulassen, kann das jeweils letzte Plattenelement A nicht nur eine einfache Nut 32 zur Aufnahme der Rückwand beinhalten, da die Rückwand sich während der Relativbewegung der Plattenelement A, B in den jeweils anderen Nuten 30 abstützt und so die Verriegelungsbewegung des letzten Plattenelements A verhindert. Um diese dennoch zu ermöglichen, sieht die Erfindung die Ausweitung der Nut 32 des ersten Plattenelements A in Form einer Ausklinkung 33 vor, welche die Nut 32 bis zu einem Kopfbereich 34 des ersten Plattenelements A hin erweitert. Innerhalb dieser Ausklinkung 33 ist eine weitere Nut 35 vorgesehen, wobei die Nut 32 des ersten Plattenelements A treppenartig in die Nut 35 der Ausklinkung 33 übergeht.

Hierbei ist darauf zu achten, dass ein Grund 36 der Ausklinkung 33 mindestens auf Ebene eines Grundes 37 der Nut 32 verläuft, so dass die Rückwand 29 während der Verriegelungsbewegung über diese hinweg innerhalb der Ausklinkung 33 liegt und dabei maximal auf dem jeweiligen Grund 36, 37 aufliegt. Die in Ebene des ersten Plattenelements A verlaufende Tiefe der Ausklinkung 33 muss dabei mindestens der Länge der Verriegelungsbewegung entsprechen, welche sich insbesondere durch die jeweilige Länge e1, e2 der ersten und zweiten Leistenabschnitte 8a, 24a der Figuren 5 und 6 ergibt.

Um nun die Rückwand 29 innerhalb des geschlossenen Rahmens aus einzelnen Plattenelementen A, B auch an dem letzten Plattenelement A zu halten, ist eine Klemmleiste 38 vorgesehen. Die Klemmleiste 38 ist dabei in Bezug auf ihre Querschnittsform an die Ausklinkung 33 und die daran angeordnete Nut 35 angepasst. Dabei entspricht die Tiefe der Klemmleiste 38 der Tiefe der Ausklinkung 33 abzüglich der Breite der Nut 32, in welcher die Rückwand 29 angeordnet ist. Aufgrund der Querschnittsanpassung und der notwendigen Haltewirkung besitzt die Klemmleiste 38 einen zweischenkligen Querschnitt, wobei ein erster Schenkel 38a auf dem Grund 36 der Ausklinkung 33 aufliegt, während ein zweiter Schenkel 38b der Klemmleiste 38 in der Nut der Ausklinkung 33 angeordnet ist. Sobald die einen Rahmen bildenden Plattenelemente A, B durch die Verriegelungsbewegung miteinander verbunden sind, ist die Rückwand 29 umlaufend in den Nuten 30, 32 der Plattenelemente A, B angeordnet, so dass die Klemmleiste 38 in die Ausklinkung 33 und insbesondere in deren Nut 35 eingesetzt werden kann. Durch die Klemmleiste 38 wird eine zusätzliche Flanke der Nut 32 in dem ersten Plattenelement A gebildet, innerhalb der die Rückwand 29 sicher gehalten ist.

In einer nicht näher dargestellten, alternativen Ausgestaltung kann der in die Nut 35 der Ausklinkung 33 eingreifende Schenkel 38b zumindest bereichsweise einen schrägen oder verdickten Verlauf aufweisen, so dass die Klemmleiste 38 mit entsprechendem Kraftaufwand in die Ausklinkung 33 und insbesondere in deren Nut 35 einbringbar ist. Demgegenüber kann selbstverständlich auch die Nut 35 der Ausklinkung 33 einen schrägen oder sich verjüngenden Bereich besitzen, wodurch ebenfalls eine solche, entsprechenden Kraftaufwand fordernde Klemmwirkung erzeugbar ist. Um den so geschaffenen Rahmen aus einzelnen Plattenelementen A, B zu öffnen, ist zunächst die Entfernung der Klemmleiste 38 notwendig, wodurch die Entriegelungsbewegung des letzten Plattenelements A ermöglicht wird, um die Verbindung zu einem benachbarten Plattenelement B aufzulösen.

### Bezugszeichen:

- 1 -: Plattenverbund
- 2 -: Kopplungsmittel
- 3 -: Außenseite
- 4 -: Trennfuge
- 5 -: erste Stirnseite
- 6 -: erste Nut
- 7 -: Zunge
- 8 -: erste Randleiste
- 8a -: erster Leistenabschnitt
- 9 -: Kuppelkanal
- 10 -: Grund
- 11 -: Grund
- 12a -: Flanke
- 12b -: Flanke
- 13 -: innere Seitenfläche
- 14-: Kopfbereich
- 15 -: erster Teilbereich
- 16 -: äußere Seitenfläche
- 17 -: Fase
- 18 -: innerer Randbereich
- 19 -: äußerer Randbereich
- 20 -: zweite Stirnseite
- 21 -: zweite Nut
- 22 -: Grund
- 23a -: Flanke
- 23b -: Flanke
- 24 -: zweite Randleiste
- 24a -: zweiter Leistenabschnitt
- 25 -: Kopfleiste
- 26 -: Ausnehmung
- 27 -: zweiter Teilbereich
- 28 -: äußere Ecke
- 29 -: Rückwand
- 30 -: Nut
- 31 -: Randbereich, seitlich
- 32 -: Nut
- 33 -: Ausklinkung
- 34 -: Kopfbereich
- 35 -: Nut
- 36 -: Grund
- 37 -: Grund
- 38 -: Klemmleiste
- 38a -: Schenkel
- 38b -: Schenkel

- A -: erstes Plattenelement
- B -: zweites Plattenelement
- c -: Winkel
- d -: Verbindungsebene
- e1 -: Länge
- e2 -: Länge
- f -: Winkel
- g -: Winkel
- x -: Längsrichtung
- x1 -: Abstand
- x2 -: Abstand

## Patentansprüche

1. Leimloser Plattenverbund, umfassend wenigstens ein erstes Plattenelement (A) und ein zweites Plattenelement (B), welche über an diesen angeordnete, sich jeweils parallel zu einer Längsrichtung (x) einer ersten Stirnseite (5) des ersten Plattenelements (A) sowie einer zweiten Stirnseite (20) des zweiten Plattenelements (B) erstreckende Kopplungsmittel (2), miteinander verbindbar sind und dabei einen Winkel (c) ungleich 180° zwischen sich einschließen, wobei als Kopplungsmittel (2) das erste Plattenelement (A) eine erste Nut (6) an seiner ersten Stirnseite (5) besitzt und das zweite Plattenelement (B) einen an seine zweite Stirnseite (20) anschließenden inneren Randbereich (18) mit einer zweiten Nut (21) umfasst, welche seitlich durch eine in die zweite Stirnseite (20) übergehende zweite Randleiste (24) begrenzt ist, wobei die erste Nut (6) durch eine Zunge (7) und eine gegenüber der Zunge (7) zurückspringende erste Randleiste (8) begrenzt ist, wobei die erste Randleiste (8) in einzelne erste Leistenabschnitte (8a) und die zweite Randleiste (24) in einzelne zweite Leistenabschnitte (24a) unterteilt sind, so dass im gekoppelten Zustand der Plattenelemente (A, B) die ersten Leistenabschnitte (8a) und die zweiten Leistenabschnitte (24a) sich zumindest bereichsweise hinterschneiden, wobei die ersten Leistenabschnitte (8a) in der zweiten Nut (21) und die zweiten Leistenabschnitte (24a) in der ersten Nut (6) angeordnet sind, und wobei die zweite Stirnseite (20) eine sich parallel zu deren Längsrichtung (x) erstreckende Kopfleiste (25) besitzt und die Zunge (7) einen mit der Kopfleiste (25) korrespondierenden Kuppelkanal (9) aufweist, wobei die Kopfleiste (25) im gekoppelten Zustand der Plattenelemente (A, B) in dem Kuppelkanal (9) angeordnet ist, **dadurch gekennzeichnet, dass** das erste Plattenelement (A) einen ersten Teilbereich (15) aufweist, welcher gegenüber einer äußeren Seitenfläche (16) in einem ersten Winkel (f) kleiner 90 Grad und größer 45 Grad geneigt ist, so dass eine Verbindungsebene (d), welche im Schnitt der inneren Seitenfläche (13) und dem inneren Randbereich (18) gelegene innere Ecke nicht exakt schneidet und dass das Plattenelement (B) einen geneigten Teilbereich (27) an einer zweiten Stirnseite (20) aufweist, welcher sich zwischen einer Kopfleiste (25) und im äußeren Randbereich (19) des zweiten Plattenelementes (B) erstreckt, wobei der Teilbereich (27) und der äußere Randbereich (19) des zweiten Plattenelementes (B) einen Winkel kleiner 45 Grad aufweist.

2. Plattenverbund nach Anspruch 1, **dadurch gekennzeichnet, dass** die ersten Leistenabschnitte (8a) in einem Abstand (x1) und die zweiten Leistenabschnitte (24a) in einem Abstand (x2) voneinander angeordnet sind.

3. Plattenverbund nach Anspruch 1 oder 2, **dadurch gekennzeichnet, dass** der Abstand (x1) der ersten Leistenabschnitte (8a) untereinander mindestens einer parallel zur Längsrichtung (x) der zweiten Stirnseite (20) gemessenen Länge (e2) der zweiten Leistenabschnitte (24a) und/oder der Abstand (x2) der zweiten Leistenabschnitte (24a) untereinander mindestens einer parallel zur Längsrichtung (x) der ersten Stirnseite (5) gemessenen Länge (e1) der ersten Leistenabschnitte (8a) entspricht.

4. Plattenverbund nach Anspruch 3, **dadurch gekennzeichnet, dass** die Kopfleiste (25) an den Kuppelkanal (9) und/oder die ersten Leistenabschnitte (8a) an die zweite Nut (21) und/oder die zweiten Leistenabschnitte (24a) an die erste Nut (6) jeweils formangepasst sind.

5. Plattenverbund nach einem der Ansprüche 1 bis 4, **dadurch gekennzeichnet, dass** die Zunge (7) in eine äußere Seitenfläche (16) des ersten Plattenelements (A) übergeht.

6. Plattenverbund nach einem der Ansprüche 1 bis 5, **dadurch gekennzeichnet, dass** die Zunge (7) im gekoppelten Zustand der Plattenelemente (A, B) die zweite Stirnseite (20) vollständig verdeckt.

7. Plattenverbund nach einem der Ansprüche 1 bis 6, **dadurch gekennzeichnet, dass** die Kopplungsmittel (2) steif ausgebildet sind.

8. Plattenverbund nach einem der Ansprüche 1 bis 7, **dadurch gekennzeichnet, dass** zumindest ein erster Teilbereich (15) der Zunge (7) und eine äußere Seitenfläche (16) des ersten Plattenelements (A) einen ersten Winkel (f) sowie wenigstens ein zweiter Teilbereich (27) der zweiten Stirnseite (20) und ein dem inneren Randbereich (18) gegenüberliegender äußerer Randbereich (19) des zweiten Plattenelements (B) einen zweiten Winkel (g) von jeweils kleiner (<) 90° zwischen sich einschließen.

9. Plattenverbund nach Anspruch 8, **dadurch gekennzeichnet, dass** im verbundenen Zustand der Plattenelemente (A, B) eine zwischen dem ersten Teilbereich (15) und dem zweiten Teilbereich (27) verlaufende Verbindungsebene (d) eine im Schnittpunkt des äußeren Randbereichs (19) des zweiten Plattenelements (B) und der äußeren Seitenfläche (16) des ersten Plattenelements (A) gelegene äußere Ecke (28) schneidet.

10. Plattenverbund nach einem der Ansprüche 1 bis 9, **dadurch gekennzeichnet, dass** dieser wenigstens drei Plattenelemente (A, B) umfasst, wobei die Plattenelemente (A, B) im miteinander gekoppelten Zustand einen leimlosen Korpus in Form eines in sich geschlossenen Rahmen bilden.

11. Plattenverbund nach Anspruch 10, **dadurch gekennzeichnet, dass** die Plattenelemente (A, B) eine jeweils innerhalb des zusammengesetzten Rahmens verlaufende Nut (31, 32) aufweisen, in der eine Rückwand (29) anordenbar ist, wobei ein Keilelement vorgesehen ist, welches zwischen einer der inneren Seitenflächen (13) eines der Plattenelemente (A, B) und der Rückwand (29) anordenbar ist.

12. Plattenverbund nach Anspruch 11, **dadurch gekennzeichnet, dass** das Keilelement eine Rastnase aufweist, welche im angeordneten Zustand des Keilelements zwischen einer der inneren Seitenflächen (13) eines der Plattenelemente (A, B) und der Rückwand (29) hinter die Rückwand (29) greift.

13. Plattenverbund nach einem der Ansprüche 1 bis 12, **dadurch gekennzeichnet, dass** die erste Randleiste (8) in eine innere Seitenfläche (13) des ersten Plattenelements (A) übergeht.

14. Verfahren zum leimlosen Verbinden wenigstens zweier einen Winkel (c) ungleich 180° zwischen sich einschließender Plattenelemente (A, B) zu einem Plattenverbund (1) gemäß Anspruch 1, wobei die Plattenelemente (A, B) miteinander in Eingriff bringbare Kopplungsmittel (2) mit in einzelne Leistenabschnitte (8a, 24a) unterteilte Randleisten (8, 24) aufweisen, wobei die miteinander zu verbindenden Plattenelemente (A, B) so lange einander angenähert werden, bis zumindest einer der ersten Leistenabschnitte (8a) des ersten Plattenelements (A) zwischen zwei der zweiten Leistenabschnitte (24a) des zweiten Plattenelements (B) in Ebene einer an einem inneren Randbereich (18) des zweiten Plattenelements (B) angeordneten zweiten Nut (21) und wenigstens einer der zweiten Leistenabschnitte (24a) in Ebene einer an einer ersten Stirnseite (5) des ersten Plattenelements (A) angeordneten ersten Nut (6) hindurch geglitten ist, wobei die Plattenelemente (A, B) anschließend über eine begrenzte Relativbewegung zueinander in eine parallel zu einer Längsrichtung (x) der ersten Stirnseite (5) verlaufenden Verriegelungsrichtung entgegengesetzt zueinander verlagert werden, bis der erste Leistenabschnitt (8a) zumindest abschnittsweise in der zweiten Nut (21) und der zweite Leistenabschnitt (24a) zumindest abschnittsweise in der ersten Nut (6) angeordnet ist, so dass der eine der ersten Leistenabschnitte (8a) einen der zweiten Leistenabschnitte (24a) zumindest abschnittsweise hinterschneidet, **dadurch gekennzeichnet, dass** am Ende der Annäherung der Plattenelemente (A, B) eine Kopfleiste (25) des zweiten Plattenelements (B) in einen Kuppelkanal (9) des ersten Plattenelements (A) greift, wobei die Kopfleiste (25) während der anschließenden Relativbewegung der Plattenelemente (A, B) innerhalb des Kuppelkanals (9) parallel zur Längsrichtung (x) verschoben wird.

## Claims

1. Glueless composite panel, comprising at least a first panel element (A) and a second panel element (B) that can be connected together by means of coupling means (2) arranged thereon and respectively extending parallel to a longitudinal direction (x) of a first end face (5) of the first panel element (A) and of a second end face (20) of the second panel element (B), and thereby enclose between them an angle (c) that is not equal to 180°, wherein the first panel element (A) has, as coupling means (2), a first groove (6) on its first end face (5) and the second panel element (B) comprises an inner edge region (18) adjoining its second end face (20) and with a second groove (21), which is laterally delimited by a second edge strip (24) that merges into the second end face (20), wherein the first groove (6) is delimited by a tongue (7) and a first edge strip (8) which is set back with respect to the tongue (7), wherein the first edge strip (8) is divided into individual first strip portions (8a) and the second edge strip (24) is divided into individual second strip portions (24a) such that, in the coupled state of the panel elements (A, B), the first strip portions (8a) and the second strip portions (24a) undercut one another at least in certain areas, wherein the first strip portions (8a) are arranged in the second groove (21) and the second strip portions (24a) are arranged in the first groove (6), and wherein the second end face (20) has a head strip (25) which extends parallel to its longitudinal direction (x) and the tongue (7) comprises a coupling channel (9) which corresponds to the head strip (25), wherein, with the panel elements (A, B) in the coupled state, the head strip (25) is arranged in the coupling channel (9), **characterised in that**
the first panel element (A) has a first partial region (15) which is inclined relative to an outer side surface (16) at a first angle (f) that is smaller than 90 degrees and greater than 45 degrees so that a connection plane (d) does not exactly intersect the internal corner located at the intersection of the inner side surface (13) and the inner edge region (18), and **in that** the panel element (B) has an inclined partial region (27) on a second end side (20) which extends between a head strip (25) and in the outer edge region (19) of the second panel element (B), wherein the partial region (27) and the outer edge region (19) of the second panel element (B) have an angle of less than 45 degrees.

2. Composite panel according to claim 1, **characterised in that** the first strip portions (8a) are arranged at a spacing (x1) from one another and the second strip portions (24a) are arranged at a spacing (x2) from one another.

3. Composite panel according to claim 1 or 2, **characterised in that** the spacing (x1) between the first strip portions (8a) corresponds to at least a length (e2) of the second strip portions (24a) measured parallel to the longitudinal direction (x) of the second end face (20) and/or the spacing (x2) between the second strip portions (24a) corresponds to at least a length (e1) of the first strip portions (8a) measured parallel to the longitudinal direction (x) of the first end face (5).

4. Composite panel according to claim 3, **characterised in that** the head strip (25) is adapted in shape to the coupling channel (9) and/or the first strip portions (8a) are adapted in shape to the second groove (21) and/or the second strip portions (24a) are adapted in shape to the first groove (6).

5. Composite panel according to any one of claims 1 to 4, **characterised in that** the tongue (7) merges into an outer side face (16) of the first panel element (A).

6. Composite panel according to any one of claims 1 to 5, **characterised in that**, with the panel elements (A, B) in the coupled state, the tongue (7) completely covers the second end face (20).

7. Composite panel according to any one of claims 1 to 6, **characterised in that** the coupling means (2) are rigid.

8. Composite panel according to any one of claims 1 to 7, **characterised in that** at least a first partial region (15) of the tongue (7) and an outer side face (16) of the first panel element (A) enclose between them a first angle (f), and at least one second partial region (27) of the second end face (20) and an outer edge region (19) of the second panel element (B) located opposite the inner edge region (18) enclose between them a second angle (g), the respective angles being less than (<) 90°.

9. Composite panel according to claim 8, **characterised in that**, in the connected state of the panel elements (A, B), a connection plane (d) extending between the first partial region (15) and the second partial region (27) intersects an external corner (28) that lies at the point of intersection of the outer edge region (19) of the second panel element (B) and the outer side face (16) of the first panel element (A).

10. Composite panel according to any one of claims 1 to 9, **characterised in that** it comprises at least three panel elements (A, B), the panel elements (A, B) forming, in the coupled-together state, a glueless carcass in the form of a closed frame.

11. Composite panel according to claim 10, **characterised in that** the panel elements (A, B) each comprise a groove (31, 32) which extends within the assembled frame and in which a rear wall (29) can be arranged, a wedge element being provided, which can be arranged between one of the inner side faces (13) of one of the panel elements (A, B) and the rear wall (29).

12. Composite panel according to claim 11, **characterised in that** the wedge element comprises a latching lug, which, with the wedge element arranged between one of the inner side faces (13) of one of the panel elements (A, B) and the rear wall (29), engages behind the rear wall (29).

13. Composite panel according to any one of claims 1 to 12, **characterised in that** the first edge strip (8) merges into an inner side face (13) of the first panel element (A).

14. Method for the glueless connection of at least two panel elements (A, B) that enclose between them an angle (c) which is not equal to 180° to form a composite panel according to claim 1, wherein the panel elements (A, B) comprise coupling means (2) that can be brought into engagement with each other and have edge strips (8, 24) which are divided into individual strip portions (8a, 24a), wherein the panel elements (A, B) that are to be connected together are brought together until at least one of the first strip portions (8a) of the first panel element (A) is slid through between two of the second strip portions (24a) of the second panel element (B) in the plane of a second groove (21) arranged on an inner edge region (18) of the second panel element (B) and at least one of the second strip portions (24a) is slid through in the plane of a first groove (6) arranged on a first end face (5) of the first panel element (A), wherein the panel elements (A, B) are then moved in opposite directions to one another over a limited relative movement with respect to one another in a locking direction which extends parallel to a longitudinal direction (x) of the first end face (5), until the first strip portion (8a) is arranged at least in part in the second groove (21) and the second strip portion (24a) is arranged at least in part in the first groove (6), such that said one of the first strip portions (8a) undercuts one of the second strip portions (24a) at least in part,
**characterised in that** once the panel elements (A, B) have been brought together, a head strip (25) of the second panel element (B) engages in a coupling channel (9) of the first panel element (A), wherein the head strip (25) is displaced parallel to the longitudinal direction (x) during the subsequent relative movement of the panel elements (A, B) within the coupling channel (9).

## Revendications

1. Panneau composite sans colle, comprenant au moins un premier panneau élémentaire (A) et un second panneau élémentaire (B), lesquels peuvent être assemblés l'un à l'autre par des moyens de couplage (2) disposés au niveau de ceux-ci, s'étendant respectivement parallèlement à une direction longitudinale (x) d'une première face frontale (5) du premier panneau élémentaire (A) ainsi que d'une seconde face frontale (20) du second panneau élémentaire (B) et incluent ainsi un angle (c) différent de 180°, dans lequel comme moyen de couplage (2) le premier panneau élémentaire (A) possède une première rainure (6) sur sa première face frontale (5) et le second panneau élémentaire (B) possède une zone de bordure (18) intérieure adjacente à sa seconde face latérale avec une seconde rainure (21), laquelle est limitée latéralement par une seconde baguette de bordure (24) passant dans la seconde face frontale (20), dans lequel la première rainure (6) est limitée par une languette (7) et une première baguette de bordure (8) en retrait par rapport à la languette (7), dans lequel la première baguette de bordure (8) est subdivisée en premiers segments de baguette individuels (8a) et la seconde baguette de bordure (24) est subdivisée en seconds segments de baguette individuels (24a), de telle sorte qu'à l'état couplé des panneaux élémentaires (A, B), les premiers segments de baguette (8a) et les seconds segments de baguette (24a) sont en contre-dépouille au moins par endroit, dans lequel les premiers segments de baguette (8a) sont disposés dans la seconde rainure (21) et les seconds segments de baguette (24a) sont disposés dans la première rainure (6), et dans lequel la seconde face frontale (20) possède une baguette supérieure (25) s'étendant parallèlement à sa direction longitudinale (x) et la languette (7) présente un canal de couplage (9) correspondant à la baguette supérieure (25), dans lequel la baguette supérieure (25) est disposée à l'état couplé des panneaux élémentaires (A, B) dans le canal de couplage (9), **caractérisé en ce que** le premier panneau élémentaire (A) présente une première zone partielle (15) laquelle est inclinée par rapport à une surface latérale extérieure (16) dans un premier angle (f) inférieur à 90 degrés et supérieur à 45 degrés, de sorte qu'un plan de liaison (d) ne coupe pas exactement un coin intérieur placé dans la coupe de la surface latérale intérieure (13) et la zone de bordure intérieure (18) et que le panneau élémentaire (B) présente une zone partielle inclinée (27) sur une seconde face frontale (20), laquelle s'étend entre une baguette supérieure (25) et dans la zone de bordure extérieure (19) du second panneau élémentaire (B), dans lequel la zone partielle (27) et la zone de bordure extérieure (19) du second panneau élémentaire (B) présentent un angle inférieur à 45 degrés.

2. Panneau composite selon la revendication 1, **caractérisé en ce que** le premier segment de baguette (8a) est disposé dans un intervalle (x1) et le second segment de baguette (24a) est disposé dans un intervalle (x2) l'un par rapport à l'autre.

3. Panneau composite selon la revendication 1 ou 2, **caractérisé en ce que** l'intervalle (x1) du premier segment de baguette (8a) correspond mutuellement à au moins une longueur (e2) mesurée parallèlement à la direction longitudinale (x) de la seconde face frontale (20) du second segment de baguette (24a) et/ou l'intervalle (x2) du second segment de baguette (24a) correspond mutuellement à au moins une longueur (e1) mesurée parallèlement à la direction longitudinale (x) de la première face frontale (5) du premier segment de baguette (8a).

4. Panneau composite selon la revendication 3, **caractérisé en ce que** la baguette supérieure (25) présente respectivement une forme adaptée au canal de couplage (9) et/ou le premier segment de baguette (8a) présente respectivement une forme adaptée à la seconde rainure (21) et/ou le second segment de baguette (24a) présente respectivement une forme adaptée à la première rainure (6).

5. Panneau composite selon l'une quelconque des revendications 1 à 4, **caractérisé en ce que** la languette (7) passe dans une surface latérale extérieure (16) du premier panneau élémentaire (A).

6. Panneau composite selon l'une quelconque des revendications 1 à 5, **caractérisé en ce que** la languette (7) à l'état couplé des panneaux élémentaires (A, B) recouvre complètement la seconde face frontale (20).

7. Panneau composite selon l'une quelconque des revendications 1 à 6, **caractérisé en ce que** les moyens de couplage (2) sont conçus de façon rigide.

8. Panneau composite selon l'une quelconque des revendications 1 à 7, **caractérisé en ce qu'**au moins une première zone partielle (15) de la languette (7) et une surface latérale extérieure (16) du premier panneau élémentaire (A) inclut un premier angle (f) ainsi qu'au moins une seconde zone partielle (27) de la seconde face frontale (20) et une zone de bordure (19) extérieure du second panneau élémentaire (B), opposée à la zone de bordure intérieure (18), incluent entre elles un second angle (g) respectivement inférieur (<) à 90 °.

9. Panneau composite selon la revendication 8, **caractérisé en ce qu'**à l'état lié des panneaux élémentaires (A, B) un plan de liaison (d) évoluant entre la première zone partielle (15) et la seconde zone partielle (27) coupe un coin extérieur (28) placé à l'intersection de la zone de bordure extérieure (19) du second panneau élémentaire (B) et de la surface latérale extérieure (16) du premier panneau élémentaire (A).

10. Panneau composite selon l'une quelconque des revendications 1 à 9, **caractérisé en ce que** celui-ci comprend au moins trois panneaux élémentaires (A, B), dans lequel les panneaux élémentaires (A, B) forment à l'état couplé les uns aux autres, un corps sans colle sous la forme d'un cadre fermé sur lui-même.

11. Panneau composite selon la revendication 10, **caractérisé en ce que** les panneaux élémentaires (A, B) présentent respectivement une rainure (31, 32) évoluant à l'intérieur du cadre assemblé dans laquelle une paroi arrière (29) peut être disposée, dans lequel un élément en coin est prévu, lequel peut être disposé entre l'une des faces latérales intérieures (13) d'un des panneaux élémentaires (A, B) et la paroi arrière (29).

12. Panneau composite selon la revendication 11, **caractérisé en ce que** l'élément en coin présente un ergot d'encliquetage, lequel s'accroche à l'arrière de la paroi arrière (29) à l'état monté de l'élément en coin entre l'une des faces latérales intérieures (13) de l'un des panneaux élémentaires (A, B) et la paroi arrière (29).

13. Panneau composite selon l'une quelconque des revendications 1 à 12, **caractérisé en ce que** la première baguette de bordure (8) passe dans une face latérale intérieure (13) du premier panneau élémentaire (A).

14. Procédé permettant de relier entre eux sans colle au moins deux panneaux élémentaires (A, B) incluant un angle (c) différent de 180° en un panneau composite (1) selon la revendication 1,
dans lequel les panneaux élémentaires (A, B) présentent des moyens de couplage (2) pouvant être mis en prise les uns avec les autres avec des baguettes de bordure (8, 24) subdivisées en segments de baguette (8a, 24a) individuels, dans lequel les panneaux élémentaires (A, B) à relier les uns aux autres sont approchés les uns des autres jusqu'à ce qu'au moins l'un des premiers segments de baguette (8a) du premier panneau élémentaire (A) soit glissé entre deux des seconds segments de baguette (24a) du second panneau élémentaire (B) dans le plan d'une seconde rainure (21) disposée sur une zone de bordure intérieure (18) du second panneau élémentaire (B) et au moins l'un des seconds segments de baguette (24a) est glissé dans le plan d'une première rainure (6) disposée sur une première face frontale (5) du premier panneau élémentaire (A), dans lequel les panneaux élémentaires (A, B) sont décalés ensuite de façon opposée d'un à l'autre par le biais d'un mouvement relatif limité l'un vers l'autre dans une direction de blocage évoluant parallèlement à une direction longitudinale (x) de la première face frontale (5), jusqu'à ce que le premier segment de baguette (8a) soit disposé au moins par endroit dans la seconde rainure (21) et que le second segment de baguette (24a) soit disposé au moins par endroit dans la première rainure (6) de sorte que l'un des premiers segments de baguette (8a) soit en contre-dépouille au moins par endroit avec l'un des seconds segments de baguette (24a), **caractérisé en ce qu'**à la fin du rapprochement des panneaux élémentaires (A, B), une baguette supérieure (25) du second panneau élémentaire (B) s'accroche dans un canal de couplage (9) du premier panneau élémentaire (A), dans lequel la baguette supérieure (25) est poussée parallèlement à la direction longitudinale (x) pendant le mouvement relatif consécutif des panneaux élémentaires (A, B) à l'intérieur du canal de couplage (9).
